Europäisches Patentamt

European Patent Office

Office européen des brevets

(19)

(11) **EP 1 377 134 A1**

(12) **EUROPEAN PATENT APPLICATION**
published in accordance with Art. 158(3) EPC

(43) Date of publication:
**02.01.2004 Bulletin 2004/01**

(51) Int Cl.[7]: **H05B 33/14**, H05B 33/22,
H05B 33/02, C09K 11/02,
C09K 11/08

(21) Application number: **02708741.0**

(22) Date of filing: **29.03.2002**

(86) International application number:
**PCT/JP2002/003226**

(87) International publication number:
**WO 2002/080626 (10.10.2002 Gazette 2002/41)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **29.03.2001 JP 2001097510
29.03.2001 JP 2001097511
29.03.2001 JP 2001097517
26.09.2001 JP 2001293442
26.09.2001 JP 2001293448
27.09.2001 JP 2001298416
27.09.2001 JP 2001298421
28.09.2001 JP 2001301596**

(71) Applicant: **Fuji Photo Film Co., Ltd.
Kanagawa 250-0123 (JP)**

(72) Inventors:
• **TAKAHASHI, Kenji, Fuji Photo Film Co., Ltd.
Ashigara-kami-gun, Kanagawa 258-8538 (JP)**
• **ASHIDA, Tsuyoshi, Fuji Photo Film Co., Ltd.
Ashigara-kami-gun, Kanagawa 258-8538 (JP)**

(74) Representative: **Klunker . Schmitt-Nilson . Hirsch
Winzererstrasse 106
80797 München (DE)**

(54) **ELECTROLUMINESCENCE DEVICE**

(57)     A dispersion electroluminescence device having a basic constitution wherein a back face sheet, a back-face side light-transmitting electrode, a luminescent layer with electroluminescence light-emitting particles dispersed in a dielectric phase, a front-face side light-transmitting electrode, and a light-transmitting front face protecting film are stacked in this order. The utilization of the constitution of the electroluminescence device the back face sheet of which has the performance of light scattering reflection and the light emitting layer of which shows the performance of light scattering provides an electroluminescence (EL) device enhanced in the efficiency of extracting emitted light outside.

FIG. 4

EP 1 377 134 A1

## Description

[Field of Invention]

The present invention relates to an electroluminescence device (EL device) which emits a light by application of electric energy.

[Background of Invention]

Recently, a liquid crystal display is widely employed as a small-size, light-weight display. Since the liquid crystal per se emits no light, a transmitted image is generally obtained utilizing a back light supplied by a light source placed on a back side and controlling the supplied light by a liquid crystal layer. A color image can be obtained by placing a color filter on a surface of the liquid crystal layer. A combination of colored lights transmitted through the color filter gives a color image.

As is described above, the liquid crystal display requires a light source and the energy consumption is high. Therefore, a small size battery for supplying electric energy to the liquid crystal display has been developed (for instance, lithium battery). Nevertheless, there are limitations in the development of a smaller-size and lighter-weight liquid crystal display. A reflective liquid crystal display employing no back light has been developed. In the use of the reflective liquid crystal display, particularly, for obtaining a color image, a color image showing a low contrast only can be obtained. Moreover, the image quality of reflected image is largely varied depending on surrounding light conditions. Therefore, the reflective liquid crystal display can be utilized only in a specific field.

For these reasons, an electroluminescence device (generally called "EL device") that *per se* emits a light by application of a small amount of electric energy so that an image can be displayed in the absence of a separately-provided light source has been given an attention.

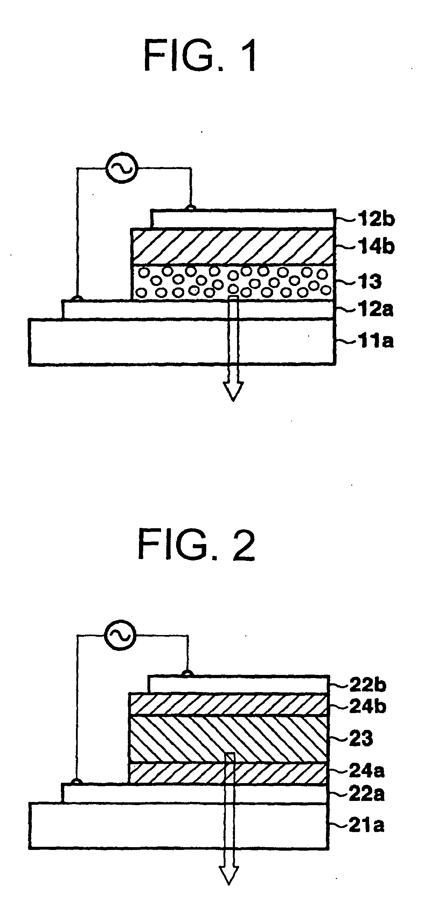

In the attached Figures 1 and 2, representative constitutions of the conventional electroluminescence devices (EL devices) are illustrated.

The EL device of Fig. 1 is an electroluminescence device named a dispersion AC EL device comprising a transparent glass substrate (or a transparent plastic material substrate, through which a light emission is extracted) 11a, a transparent electrode (ITO electrode) 12a, a light-emitting layer (generally having a thickness of 50 to 100 μm) 13, an insulating material layer 14b, and a back electrode (aluminum electrode) 12b arranged in order. By applying an alternative current between the transparent electrode 12a arranged on the front side (lower side in the figure) and the back electrode 12b, a light is emitted in alternating electric field. The emitted light is generally transmitted through the transparent electrode 12a and the transparent substrate 11a, and extracted on the front side. An ordinarily employed phosphor particle is a particle of ZnS:Cu,Cl, ZnS:Cu,Al, or ZnS:Cu,Mn,Cl. It is considered that an acicular $Cu_2S$ crystal deposits along a lattice defect of ZnS particle (particle size: 5 to 30 μm), and it serves a site of electron source. Generally, on a surface of the EL device is provided a protecting film. Moreover, various auxiliary layers may be provided between these layers.

The EL device of Fig. 2 is an electroluminescence device named a thin film AC EL device comprising a transparent glass substrate (or a transparent plastic material substrate, through which a light emission is extracted) 21a, a transparent electrode (ITO electrode) 22a, a front insulating material layer (light-transmitting insulating material layer having a thickness of 0.3 to 0.5 μm, named first insulating material layer) 24a, a light-emitting layer 23 made of a thin phosphor layer (generally having a thickness 1 μm or less) 23, a back insulating material layer 24b, and a back electrode (aluminum electrode) 22b arranged in order. By applying an alternative current between the transparent electrode 22a arranged on a front side (lower side in the figure) and the back electrode 22b, a light is emitted in the light-emitting layer 23 under alternating electric field. The emitted light is transmitted through the front insulating material layer 24a, the transparent electrode 22a and the transparent substrate 21a, and extracted on the front side. The light-emitting layer of phosphor film is formed by various vapor depositing methods or coating methods (utilizing a sol-gel method and others). An auxiliary layer such as buffer layer may be placed between the phosphor layer and the adjoining insulating material layers. Generally, on a surface of the EL device is provided a protecting film. Moreover, various auxiliary layers may be provided between the above-mentioned layers.

General structures and component materials for the conventional electroluminescence devices are described in detail in "Electroluminescence Display" (written by INOKUTI Toshio, published in 1991, by Sangyo Tosho Co., Ltd.).

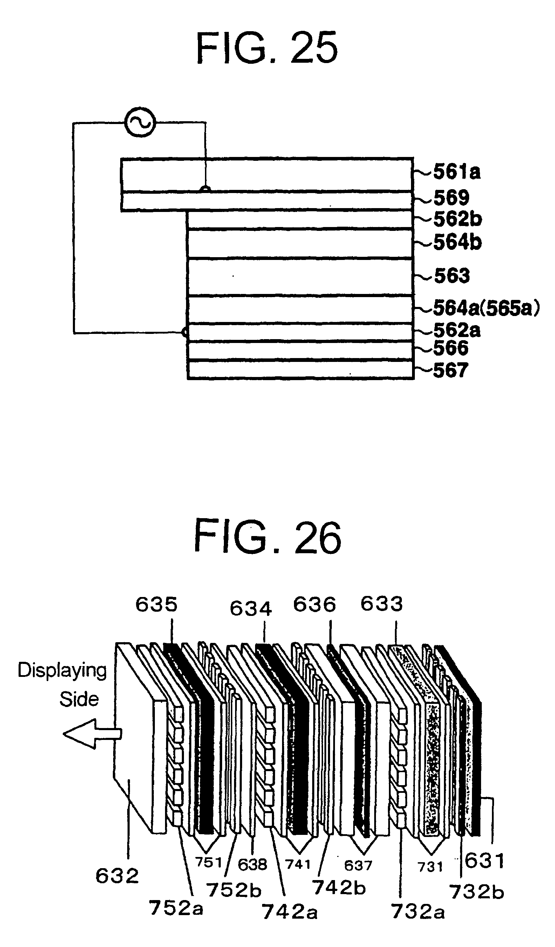

Heretofore, a multi-colored image is formed on an electroluminescence device on which a single electroluminescence light-emitting layer is divided into two or more areas and plural phosphors emitting different color lights are placed in these areas separately. Recently, there has been proposed an electroluminescence device having plural light-emitting composites comprising light-emitting layers which emit different color lights are placed one on another, whereby a multicolor image is displayed. An example of the electroluminescence device for displaying a multi-color image which comprises plural light-emitting composites are illustrated in Fig. 26.

In Fig. 26, from a light-shielding back sheet (black sheet) 631 to a front protecting sheet (glass substrate) 632 (placed on a light-extracting side, that is, a displaying side), an orange color light-emitting layer 633, a green color light-emitting layer 634, and a blue color light-emitting layer 635 are arranged. On both sides of each light-emitting layer, an insulating layer and an electrode layer are placed. In more detail, on both sides of the orange color light-emitting layer 633, an insulating layer 731 and electrodes 732a, 732b (the front electrode 732a is a transparent electrode, and the back electrode 732b is an opaque aluminum electrode) are placed. On both sides of the green color light-emitting layer 634, an insulating layer 741 and electrodes 742a, 742b (both are transparent electrodes) are placed. On both sides of the blue color light-emitting layer 635, an insulating layer 751 and electrodes 752a, 752b (both are transparent electrodes) are placed. Between the orange color light-emitting composite and the green color light-emitting composite are placed glass substrates 637 having a red filter 634 between them. Between the green color light-emitting composite and the blue color light-emitting composite is placed a transparent protecting film 638.

As is described above, it is considered that the electroluminescence device (EL device) is an excellent display device because of its self light-emitting property. However, there are problems in the conventionally developed EL display products in that the stability is poor and the amount of light emission is not enough. It is known that the problem of stability is already solved by various studies, but the problem of poor light emission should be solved.

Particularly, the dispersion EL device has a problem in that it shows a poor light emission efficiency and therefore an amount of light emission taken outside is not enough. On the other hands, a thin film EL device has a problem in that only an extremely small amount of a light emission produced inside can be taken outside. For solving these problems, various studies have been made. For instance, there is a proposal to place a light-scattering film on the glass substrate on the light-extraction side. However, the effects of the known improvements are not enough.

Accordingly, the present invention has a main object to provide an electroluminescence device from which an enough amount of light emission can be taken outside, by applying an electric power almost equivalent to that used for the conventional EL devices.

Further, the invention has a main object to provide an electroluminescence device showing a high light emission efficiency and a high light emission-extracting efficiency, under an electric power almost equivalent to that used for the conventional EL devices.

[Disclosure of Invention]

As a result of studies on the problems of the conventional electroluminescence devices, the inventor of the present invention has discovered that a light emitted in the light-emitting layer can be efficiently extracted on the outside by incorporating a light-scattering layer having a high refractive index such as almost the same as or higher than a refractive index of the light-emitting layer on a front surface (from which a light is extracted) and/or a back surface of the light-emitting layer and further by adjusting a refractive index of material present in the light-emitting layer and the light-scattering layer having a high refractive index to a level similar to or higher than the refractive index of the light-emitting layer. The present invention is based on this discovery.

The inventor has further discovered that a light emitted in a phosphor particle can be efficiently extracted on the outside by imparting a light-scattering reflective property to a substrate on the back side (back face sheet) and further imparting a light-scattering reflective property to the dielectric material layer which disperses and supports phosphor particles in the light-emitting layer.

Furthermore, the inventor has discovered that a light emitted in the phosphor particle can be efficiently extracted on the outside by employing a complex particle which is prepared by coating a phosphor particle with a coating material (e.g., dielectric material) which has a refractive index similar to or higher than the refractive index of the phosphor particle, or by employing a complex particle which is prepared by coating a dielectric material particle with a phosphor layer and further with a coating layer having a refractive index similar to or higher than the refractive index of the coated phosphor layer.

From the first aspect, the present invention resides in a dispersion electroluminescence device comprising a back face sheet, a light-transmitting back electrode, a light-emitting layer comprising electroluminescence light-emitting particles dispersed in a dielectric material phase, a light-transmitting front electrode, and a light-transmitting front protecting film arranged in order, wherein the back face sheet shows a light-scattering reflective property and the light-emitting layer shows a light-scattering property.

From the second aspect, the invention resides in a dispersion electroluminescence device comprising a back face sheet, a back electrode, a light-emitting layer comprising electroluminescence light-emitting particles dispersed in a dielectric material phase, a light-transmitting front electrode, and a light-transmitting front protecting film arranged in order, wherein the electroluminescence light-emitting particle comprises a dielectric material particle coated with a phosphor layer which is further coated with an outer coat layer.

From the third aspect, the invention resides in a dispersion electroluminescence device comprising a back face sheet, a back electrode, a light-scattering or non light-scattering, light-emitting layer which comprises electroluminescence light-emitting particles dispersed in a dielectric material phase, a light-transmitting front electrode, and a light-transmitting front protecting film arranged in order, wherein the electroluminescence light-emitting particle comprises a dielectric material particle coated with a phosphor layer.

From the fourth aspect, the invention resides in a dispersion electroluminescence device comprising a back face sheet, a light-transmitting back electrode, a light-emitting layer comprising electroluminescence light-emitting particles dispersed in a dielectric material phase, a light-transmitting front electrode, and a light-transmitting front protecting film arranged in order, wherein the back face sheet shows light reflection by a light-scattering effect, a light-scattering, high refraction layer which comprises as main component a material having a refractive index of 80% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 40% or more of a light emitted by the electroluminescence light-emitting layer toward a front side enters the light-scattering, high refraction layer.

From the fifth aspect, the invention resides in a dispersion electroluminescence device comprising a back face sheet, a light-transmitting back electrode, an electroluminescence light-emitting layer comprising electroluminescence light-emitting particles dispersed in a dielectric material phase, a light-transmitting front electrode, and a light-transmitting front protecting film arranged in order, wherein the back face sheet is a light-scattering reflective, high refraction sheet which comprises as main component a material having a refractive index of 80% or higher, based on a refractive index of the electroluminescence light-emitting layer, and a refractive index of material placed between the light-emitting layer and the back face sheet is adjusted, whereby 40% or more of a light emitted by the electroluminescence light-emitting layer toward a back side enters the back face sheet.

From the sixth aspect, the invention resides in a dispersion electroluminescence device comprising a back face sheet, a back electrode, a back insulating material layer, an electroluminescence light-emitting layer comprising electroluminescence light-emitting particles dispersed in a dielectric material phase, a light-transmitting front electrode, a light-transmitting front protecting film arranged in order, wherein the back insulating material layer is a light-scattering, high refraction, insulating material layer which comprises as main component a material having a refractive index of 80% or higher based on a refractive index of the electroluminescence light-emitting layer, and 40% or more of a light emitted by the electroluminescence light-emitting layer toward a back side enters the back insulating layer.

From the seventh aspect, the invention resides in a dispersion electroluminescence device comprising a back face sheet, a light-transmitting back electrode, an electroluminescence light-emitting layer comprising electroluminescence light-emitting particles dispersed in a dielectric material phase, an front insulating material layer, a light-transmitting front electrode, and a light-transmitting front protecting film arranged in order,

wherein the back face sheet shows light reflection by a light-scattering effect, the front insulating material layer is a light-scattering, high refraction, insulating material layer which comprises as main component a material having a refractive index of 80% or higher, based on a refractive index of the electroluminescence light-emitting layer, and 40% or more of a light emitted by the electroluminescence light-emitting layer toward a front side enters the front insulating material layer.

From the eighth aspect, the invention resides in a dispersion electroluminescence device comprising a back face sheet, a back electrode, a back insulating material layer, an electroluminescence light-emitting layer comprising electroluminescence light-emitting particles dispersed in a dielectric material phase, a light-transmitting front electrode, and a light-transmitting front protecting film arranged in order, wherein the back insulating material layer has a thickness of 10 μm or more and is a light-scattering, high refraction, insulating material layer having a diffuse reflectance of 50% or higher.

From the ninth aspect, the invention resides in an electroluminescence device comprising a back face sheet, a back electrode, a back insulating material layer, an electroluminescence light-emitting layer, a light-transmitting front electrode, and a light-transmitting front protecting film arranged in order, wherein the back insulating material layer has a thickness of 10 μm or more and is a light-scattering, high refraction, insulating material layer having a diffuse reflectance of 50% or higher.

From the tenth aspect, the invention resides in an electroluminescence device comprising a back face sheet, a light-transmitting back electrode, an electroluminescence light-emitting layer, a light-transmitting front electrode, and a light-transmitting front protecting film arranged in order, wherein the back face sheet is a light-scattering reflective, high refraction sheet comprising as main component a material having a refractive index of 80% or higher based on a refractive index of the electroluminescence light-emitting layer, and a refractive index of material placed between the light-emitting layer and the back face sheet is adjusted, whereby 40% or more of a light emitted by the electroluminescence light-emitting layer toward a back side sheet enters the back face sheet.

From the eleventh aspect, the invention resides in an electroluminescence device comprising aback face sheet, a light-transmitting back electrode, a back insulating material layer, an electroluminescence light-emitting layer, a light-transmitting front electrode, and a light-transmitting front protecting film arranged in order, wherein the back face sheet shows a light-scattering reflection, the back insulating material layer is a light-scattering, high refraction, insulating material layer which comprises as main component a material having a refractive index of 80% or higher based on a refractive index of the electroluminescence light-emitting layer, and 40% or more of a light emitted by the electroluminescence light-emitting layer toward a back side enters the back insulating material layer.

From the twelfth aspect, the invention resides in an electroluminescence device comprising a back face sheet, a light-transmitting back electrode, an electroluminescence light-emitting layer, a light-transmitting front electrode, and a light-transmitting front protecting film arranged in order, wherein the back face sheet shows light reflection by a light-scattering effect, a light-scattering, high refraction layer comprising as main component a material having a refractive index of 80% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 40% or more of a light emitted by the electroluminescence light-emitting layer toward a front side enters the light-scattering, high refraction layer.

From the thirteenth aspect, the invention resides in an electroluminescence device comprising a back face sheet, a light-transmitting back electrode, an electroluminescence light-emitting layer, a light-transmitting front electrode, and a light-transmitting front protecting film arranged in order, wherein the back face sheet shows light reflection by a light-scattering effect, a light-scattering, high refraction, insulating material layer comprising as main component a material having a refractive index of 80% or higher based on a refractive index of the electroluminescence light-emitting layer is placed on a front side of the electroluminescence light-emitting layer, whereby 40% or more of a light emitted by the electroluminescence light-emitting layer toward a front side enters the light-scattering, high refraction, insulating material layer.

From the fourteenth aspect, the invention resides in an electroluminescence device comprising a back face sheet, a light-transmitting back electrode, an electroluminescence light-emitting layer, a light-transmitting front electrode, and a light-transmitting front protecting film arranged in order, wherein the back face sheet shows light reflection by a light-scattering effect, a light-scattering, high refraction, insulating material layer which comprises as main component a material having a refractive index of 80% or higher based on a refractive index of the electroluminescence light-emitting layer is placed on a back side of the electroluminescence light-emitting layer, whereby 40% or more of a light emitted by the electroluminescence light-emitting layer toward a back side enters the light-scatting, high refraction, insulating material layer.

[Brief Description of Drawings]

Fig. 1 is a schematic section indicating a constitution of the conventional dispersion EL device.

Fig. 2 is a schematic section indicating a constitution of the conventional thin film EL device.

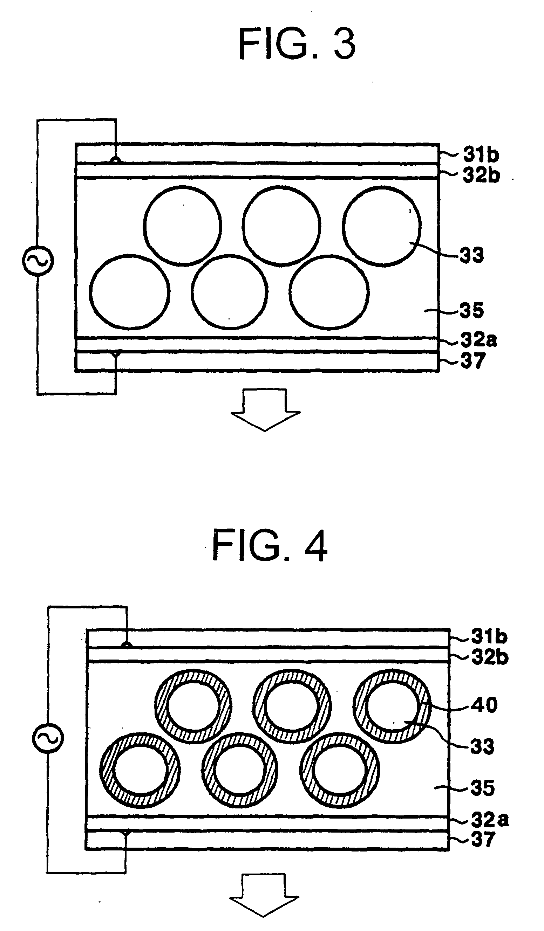

Each of Figs. 3 to 14 is a schematic section indicating a constitution of the dispersion EL device according to the invention.

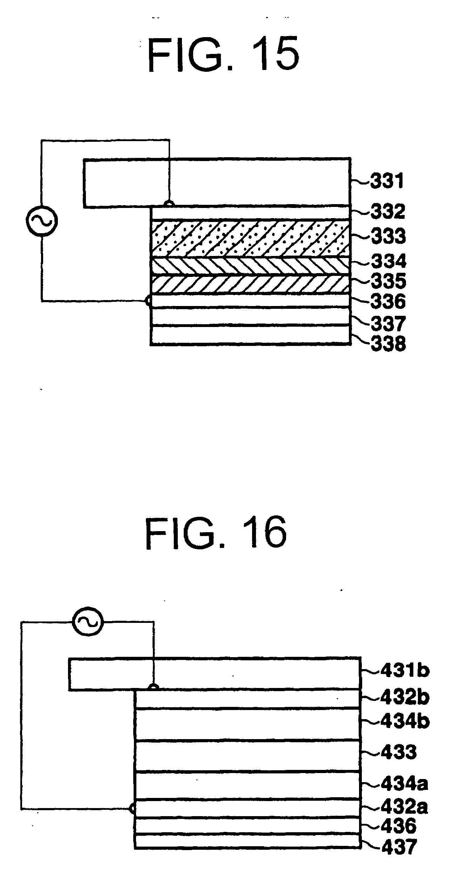

Each of Figs. 15 to 25 is a schematic section indicating a constitution of the thin film EL device according to the invention.

Fig. 26 is a schematic view indicating a constitution of the conventional multi-color displaying EL device.

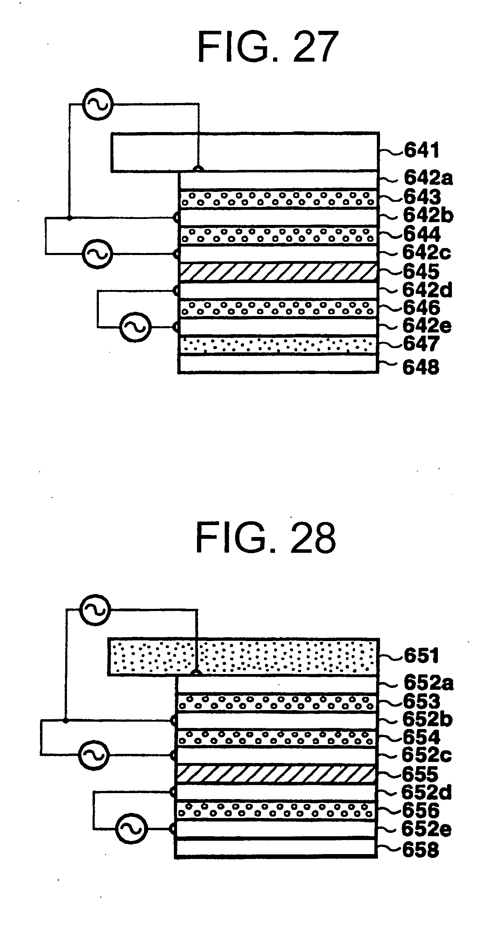

Each of Fig. 27 and Fig. 28 is a schematic section indicating a constitution of the multi-color displaying dispersion EL device according to the invention.

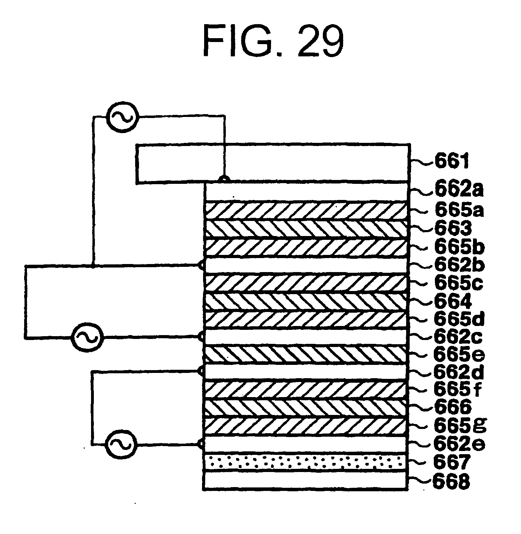

Fig. 29 is a schematic section indicating a constitution of the multi-color displaying thin layer EL device according to the invention.

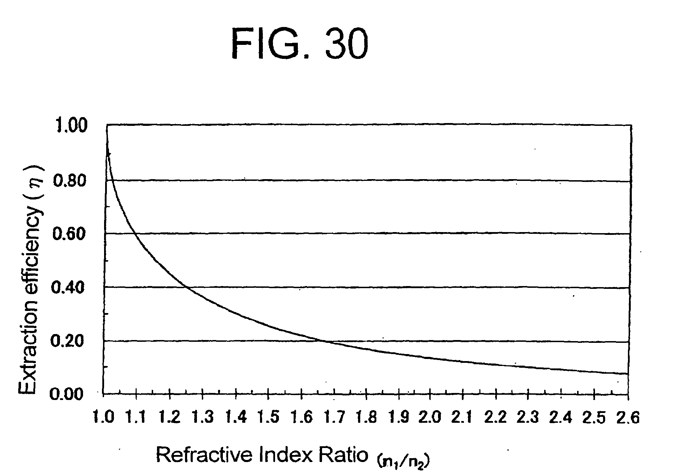

Fig. 30 is a graph indicating a light-extraction efficiency from a parallel plane.

[Preferred Embodiments of Invention]

The preferred embodiments of the invention are described below.

For the EL device of the first aspect of the invention, the following embodiments are preferred.

(1) The electroluminescence particle is a phosphor particle coated with an coating layer (e.g., a dielectric material layer).

(2) The outer coating layer of the electroluminescence light-emitting layer has a refractive index of 65% or higher based on a refractive index of the phosphor particle of the light-emitting layer.

(3) The outer coating layer of the electroluminescence light-emitting layer has a refractive index of 75% or higher based on a refractive index of the phosphor particle of the light-emitting layer.

(4) The dielectric material layer of the light-emitting layer has a refractive index of 65% or higher based on a refractive index of the phosphor particle.

(5) The dielectric material layer of the light-emitting layer has a refractive index of 75% or higher based on a refractive index of the phosphor particle.

(6) The light-transmitting front electrode is a light-transmitting electrode having a high refractive index.

(7) The particle size of the electroluminescence light-emitting particle is in the range of 30 nm to 5 μm.

(8) The dielectric material layer comprises inorganic or organic fine particles dispersed in an organic polymer.

(9) A relationship between the radius of the electroluminescence light-emitting particle and the thickness of the coating layer of the particle is as follows:

$$(r-d)/r \leq (n_2/n_1) \times 1.2$$

wherein r is a radius of the light-emitting particle, d is the thickness of the coating layer, $n_2$ is a refractive index of the dielectric material layer of the light-emitting layer, and $n_1$ is a refractive index of the phosphor layer of the light-emitting particle.

(10) The phosphor of the electroluminescence light-emitting particle is a phosphor emitting a blue light, and there is placed a phosphor layer (which converts the blue light into green light, red light, or white light) between the light-transmitting front electrode and the light-transmitting front protecting film.

(11) The phosphor of the electroluminescence light-emitting particle is a phosphor emitting a ultraviolet light, and there is placed a phosphor layer (which converts the ultraviolet light into blue light, green light, red light, or white light) between the light-transmitting front electrode and the light-transmitting front protecting film.

(12) The phosphor layer placed between the light-transmitting front electrode and the light-transmitting front protecting film is a light-scattering phosphor layer.

(13) The phosphor of the electroluminescence light-emitting particle is a phosphor emitting a blue light, a green light, an orange light, or a red light.

(14) The phosphor of the electroluminescence light-emitting particle is a phosphor emitting a white light.

(15) There are placed a color filter layer and/or an ND filter layer between the light-transmitting front electrode and the light-transmitting front protecting film.

For the EL device of the second aspect of the invention, the following embodiments are preferred.

(1) The dielectric material layer comprises an organic polymer, or comprises inorganic or organic fine particles dispersed in an organic polymer.

(2) The light-emitting layer is a light-scattering layer.

(3) The back electrode is a light-transmitting electrode, and the back face sheet shows a light-scattering reflective property.

(4) The outer dielectric material layer of the electroluminescence light-emitting particle has a refractive index of 65% or higher based on a refractive index of the phosphor layer of the light-emitting particle.

(5) The outer dielectric material layer of the electroluminescence light-emitting particle has a refractive index of 75% or higher based on a refractive index of the phosphor layer of the light-emitting particle.

(6) The dielectric material layer of the light-emitting layer has a refractive index of 65% or higher based on a refractive index of the phosphor layer of the light-emitting particle.

(7) The dielectric material layer of the light-emitting layer has a refractive index of 75% or higher based on a refractive index of the phosphor layer of the light-emitting particle. In this case, the material of the dielectric material layer is not limited to an organic polymer and can be an inorganic material or an organic-inorganic complex material (including nano-composite material).

(8) The back electrode is a light-transmitting electrode, the back face sheet is a light-scattering, high refraction reflective sheet which comprises as main component a material having a refractive index of 80% or higher based on a refractive index of the phosphor layer of the electroluminescence light-emitting particle, and the refractive index of material placed between the electroluminescence light-emitting particles and the back face sheet is adjusted, whereby 40% or more of a light emitted by the electroluminescence light-emitting particles toward a back side enters the back face sheet.

(9) The back electrode is a light-transmitting electrode, the back face sheet shows a light-scattering reflective property, a light-scattering, high refraction layer comprising as main component a material having a refractive index of 80% or higher based on a refractive index of the phosphor layer of the electroluminescence light-emitting particle is placed between the front electrode and the front protecting film, and a refractive index of material placed between the electroluminescence light-emitting particles and the light-scattering, high refraction layer is adjusted, whereby 40% or more of a light emitted by the electroluminescence light-emitting particles toward a front side enters the light-scattering, high refraction layer.

(10) The particle size of the electroluminescence light-emitting particle is in the range of 30 nm to 5 $\mu$m.

(11) A relationship between the radius of the electroluminescence light-emitting particle and the thickness of the coating layer of the particle is as follows:

$$(r-d)/r \leq (n_2/n_1) \times 1.2$$

wherein r is a radius of the light-emitting particle, d is the thickness of the coating layer, $n_2$ is a refractive index of the dielectric material layer of the light-emitting layer, and $n_1$ is a refractive index of the phosphor layer of the light-emitting particle.

(12) The dielectric material particle inside of the electroluminescence light-emitting particle has a dielectric constant of three times or more the dielectric constant of the phosphor layer of the light-emitting particle.

(13) The phosphor layer of the electroluminescence light-emitting particle comprises a phosphor emitting a blue light, and there is placed a phosphor layer (which converts the blue light into green light, red light, or white light) between the light-transmitting front electrode and the light-transmitting front protecting film.

(14) The phosphor layer of the electroluminescence light-emitting particle comprises phosphor emitting a ultraviolet light, and there is placed a phosphor layer (which converts the ultraviolet light into blue light, green light, red light, or white light) between the light-transmitting front electrode and the light-transmitting front protecting film.

(15) The phosphor layer placed between the light-transmitting front electrode and the light-transmitting front protecting film is a light-scattering phosphor layer.

(16) The phosphor layer of the electroluminescence light-emitting particle comprises a phosphor emitting a blue light, a green light, an orange light, or a red light.

(17) The phosphor layer of the electroluminescence light-emitting particle comprises a phosphor emitting a white light.

For the EL device of the third aspect of the invention, the following embodiments are preferred.

(1) The back electrode is a light-transmitting electrode, and the back face sheet shows a light-scattering reflective property.

(2) The dielectric material layer of the light-emitting layer has a refractive index of 65% or higher based on a refractive index of the phosphor layer of the light-emitting particle.

(3) The dielectric material particle inside of the electroluminescence light-emitting particle has a dielectric constant of three times or more the dielectric constant of the phosphor layer of the light-emitting particle.

(4) The back electrode is a light-transmitting electrode, the back face sheet is a light-scattering reflective, high refraction sheet which comprises as main component a material having a refractive index of 80% or higher based on a refractive index of the phosphor layer of the electroluminescence light-emitting particle, and the refractive index of material placed between the light-emitting particles and the back face sheet is adjusted, whereby 40% or more of a light emitted by the electroluminescence light-emitting particles toward a back side enters the back face sheet.

(5) A refractive index of material placed between the light-emitting particles and the back face sheet is adjusted, whereby 70% or more of a light emitted by the electroluminescence light-emitting particles toward a back side enters the back face sheet.

(6) Any of materials placed between the electroluminescence light-emitting particles and the back face sheet have a refractive index of 80% or higher based on the refractive index of the phosphor layer of the light-emitting particle.

(7) The back electrode is a light-transmitting electrode, the back face sheet shows a light-scattering reflective property, a light-scattering, high refraction layer comprising as main component a material having a refractive index of 80% or higher based on a refractive index of the phosphor layer of the electroluminescence light-emitting particle is placed between the front electrode and the front protecting film, and a refractive index of material placed between the electroluminescence light-emitting particles and the light-scattering, high refraction layer is adjusted, whereby 40% or more of a light emitted by the electroluminescence light-emitting particles toward a front side enters the light-scattering, high refraction layer.

(8) A refractive index of material placed between the electroluminescence light-emitting particles and the light-scattering, high refraction layer is adjusted, whereby 70% or more of a light emitted by the electroluminescence light-emitting particles toward a front side enters the light-scattering, high refraction layer.

(9) Any of layers and materials placed between the phosphor layer of the electroluminescence light-emitting particles and the light-scattering, high refraction layer have a refractive index of 80% or more based on the refractive index of the light-emitting layer.

(10) Any of layers and materials placed between the phosphor layer of the electroluminescence light-emitting particles and the light-scattering, high refraction layer have a refractive index of 95% or more of the refractive index of the light-emitting layer.

(11) The phosphor layer of the electroluminescence light-emitting particle comprises a phosphor emitting a blue light, and there is placed a phosphor layer (which converts the blue light into green light, red light, or white light) between the light-transmitting front electrode and the light-transmitting front protecting film.

(12) The phosphor layer of the electroluminescence light-emitting particle comprises a phosphor emitting a ultraviolet light, and there is placed a phosphor layer (which converts the ultraviolet light into blue light, green light, red light, or white light) between the light-transmitting front electrode and the light-transmitting front protecting film.

(13) The phosphor layer placed between the front light-transmitting electrode and the light-transmitting front protecting film is a light-scattering phosphor layer.

(14) The phosphor layer of the electroluminescence light-emitting particle comprises a phosphor emitting a blue light, a green light, an orange light, or a red light.

(15) The phosphor layer of the electroluminescence light-emitting particle comprises a phosphor emitting a white light.

(16) The light-scattering, high refraction back face sheet comprises a ceramic material.

(17) The light-scattering, high refraction back face sheet is a composite of a glass sheet and a light-scattering, high refraction layer.

(18) There are placed a color filter layer and/or an ND filter layer between the light-transmitting front electrode and the light-transmitting front protecting film.

For the EL device of the fourth aspect of the invention, the following embodiments are preferred.

(1) An insulating material layer is placed between the electroluminescence light-emitting layer and the light-transmitting front electrode and/or the light-transmitting back electrode.

(2) The light-scattering, high refraction layer comprises as main component a material having a refractive index of 95% or higher, based on a refractive index of the electroluminescence light-emitting layer, and a refractive index of material placed between the light-emitting layer and the light-scattering, high refraction layer is adjusted, whereby 70% or more of a light emitted by the light-emitting layer toward a front side enters the light-scattering, high refraction layer.

(3) The light-scattering, high refraction layer comprises as main component a material having a refractive index of 99% or higher, based on a refractive index of the electroluminescence light-emitting layer, and a refractive index of material placed between the light-emitting layer and the light-scattering, high refraction layer is adjusted, whereby 85% or more of a light emitted by the light-emitting layer toward a front side enters the light-scattering, high refraction layer.

(4) The non light-transmitting back face sheet showing light reflection by a light-scattering effect comprises a ceramic material.

(5) The non light-transmitting back face sheet showing light reflection by a light-scattering effect is a composite of a glass sheet and a light-scattering high refraction layer.

(6) The electroluminescence light-emitting layer comprises a phosphor emitting a visible light.

(7) The electroluminescence light-emitting layer comprises two or more phosphor layers having different color hues from each other which are placed in areas separated from each other.

(8) There are placed a color filter layer and/or an ND filter layer between the light-scattering, high refraction layer and the light-transmitting protecting film.

(9) The electroluminescence light-emitting layer comprises a phosphor emitting a ultraviolet light, and a phosphor layer which absorbs the ultraviolet light and emits a visible light is placed on the front side of the light-scattering, high refraction layer.

(10) The electroluminescence light-emitting layer comprises a phosphor emitting a ultra-violet light, and the light-scattering, high refraction layer is a light-scattering, high refraction layer which absorbs the ultra-violet light and emits a visible light.

(11) The electroluminescence light-emitting layer comprises a phosphor emitting a blue light, and there is placed a phosphor layer (which converts the blue light into green light, red light, or white light) on the front side of the light-scattering, high refraction layer.

(12) The electroluminescence light-emitting layer comprises a phosphor emitting a blue light, and the light-scattering, high refraction layer is a light-scattering, high refraction phosphor layer which absorbs the blue light amd emits green light, red light, or white light

For the EL devices of the fifth to seventh aspects of the invention, the following embodiments are preferred.

(1) An insulating material layer is placed between the electroluminescence light-emitting layer and the light-transmitting front electrode and/or the light-transmitting back electrode.

(2) A light-scattering, high refraction layer which comprises as main component a material having a refractive index of 80% or higher based on a refractive index of the electroluminescence light-emitting layer is further placed between the light-transmitting front electrode and the front protecting film, and the refractive index of material placed between the light-emitting layer and the light-scattering, high refraction layer is adjusted, whereby 40% or more of a light emitted by the electroluminescence light-emitting layer toward a front side enters the light-scattering, high refraction layer.

(3) The light-scattering, high refraction layer comprises as main component a material having a refractive index of 95% or higher, based on a refractive index of the electroluminescence light-emitting layer, and the refractive index of material placed between the light-emitting layer and the light-scattering, high refraction layer is adjusted, whereby 70% or more of a light emitted by the light-emitting layer toward a front side enters the light-scattering, high refraction layer.

(4) The light-scattering, high refraction layer comprises as main component a material having a refractive index of 99% or higher, based on a refractive index of the electroluminescence light-emitting layer, and the refractive index of material placed between the light-emitting layer and the light-scattering, high refraction layer is adjusted, whereby 85% or more of a light emitted by the light-emitting layer toward a front side enters the light-scattering, high refraction layer.

(5) The back face sheet is a light-scattering reflective, high refraction sheet which comprises as main component a material having a refractive index of 95% or higher based on a refractive index of the electroluminescence light-emitting layer, and the refractive index of material placed between the light-emitting layer and the back face sheet is adjusted, whereby 70% or more of a light emitted by the electroluminescence light-emitting particles toward a back side enters the back face sheet.

(6) The back face sheet is a light-scattering reflective, high refraction sheet which comprises as main component a material having a refractive index of 99% or higher based on a refractive index of the electroluminescence light-emitting layer, and the refractive index of any material placed between the light-emitting layer and the back face sheet is adjusted, whereby 85% or more of a light emitted by the electroluminescence light-emitting particles toward a back side enters the back face sheet.

(7) The back face sheet comprises ceramic material.

(8) The back face sheet is a composite of a glass sheet and a light-scattering, high refraction layer.

(9) The electroluminescence light-emitting layer comprises a phosphor emitting a visible light.

(10) The electroluminescence light-emitting layer comprises two or more phosphor layers having different color hues from each other which are placed in areas separated from each other.

(11) There are placed a color filter layer and/or an ND filter layer between the light-transmitting front electrode and the light-transmitting protecting film.

(12) The electroluminescence light-emitting layer comprises a phosphor emitting a ultra-violet light, and a phosphor layer absorbing the ultra-violet light and emitting a visible light is placed on the back side of the light-transmitting protecting film.

(13) The electroluminescence light-emitting layer comprises a phosphor emitting a ultra-violet light, and a light-scattering phosphor layer absorbing the ultra-violet light and emitting a visible light is placed on the back side of the light-transmitting protecting film.

(14) The electroluminescence light-emitting layer comprises a phosphor emitting a blue light, and a phosphor layer absorbing the blue light and emitting a green light, a red light or a white light is placed on the back side of the light-transmitting protecting film.

(15) The electroluminescence light-emitting layer comprises a phosphor emitting a blue light, and a light-scattering phosphor layer absorbing the blue light and emitting a green light, a red light, or a white light is placed on the back side of the light-transmitting protecting film.

(16) The electroluminescence light-emitting layer is a thin film phosphor layer, or a phosphor particle-dispersed layer comprising phosphor particles dispersed in a dielectric material layer having a refractive index of 80% or higher based on the refractive index of the phosphor particle.

For the EL device of the eighth aspect of the invention, the following embodiments are preferred.

(1) The diffuse reflectance of the back insulating material layer is 70% or higher.

(2) The diffuse reflectance of the back insulating material layer is 90% or higher.

(3) The thickness of the back insulating material layer is in the range of 10 to 100 μm.

(4) The electroluminescence light-emitting layer comprises a phosphor emitting a visible light.

(5) The electroluminescence light-emitting layer comprises two or more phosphor layers having different color hues from each other which are placed in areas separated from each other.

(6) There are placed a color filter layer and/or an ND filter layer between the light-transmitting front electrode and the light-transmitting protecting film.

(7) The electroluminescence light-emitting layer comprises a phosphor emitting a ultra-violet light, and a phosphor layer absorbing the ultra-violet light and emitting a visible light is placed on the back side of the light-transmitting protecting film.

(8) The electroluminescence light-emitting layer comprises a phosphor emitting a ultra-violet light, and a light-scattering phosphor layer absorbing the ultra-violet light and emitting a visible light is placed on the back side of the light-transmitting protecting film.

(9) The electroluminescence light-emitting layer comprises a phosphor emitting a blue light, and a phosphor layer absorbing the blue light and emitting a green light, a red light or a white light is placed on the back side of the light-transmitting protecting film.

(10) The electroluminescence light-emitting layer comprises a phosphor emitting a blue light, and a light-scattering phosphor layer absorbing the blue light and emitting a green light, a red light, or a white light is placed on the back side of the light-transmitting protecting film.

For the EL device of the ninth aspect of the invention, the following embodiments are preferred.

(1) The diffuse reflectance of the back insulating material layer is 70% or higher.

(2) The diffuse reflectance of the back insulating material layer is 90% or higher.

(3) The thickness of the back insulating material layer is in the range of 10 to 100 μm.

(4) The electroluminescence light-emitting layer is a thin phosphor film.

(5) The electroluminescence light-emitting layer is a light-emitting layer in which electroluminescence light-emitting particles are dispersed in a dielectric material phase.

(6) The electroluminescence light-emitting layer comprises a phosphor emitting a visible light.

(7) The electroluminescence light-emitting layer comprises two or more phosphor layers having different color hues from each other which are placed in areas separated from each other.

(8) There are placed a color filter layer and/or an ND filter layer between the light-transmitting front electrode and the light-transmitting protecting film.

(9) The electroluminescence light-emitting layer comprises a phosphor emitting a ultra-violet light, and a phosphor layer absorbing the ultra-violet light and emitting a visible light is placed on the back side of the light-transmitting protecting film.

(10) The electroluminescence light-emitting layer comprises a phosphor emitting a ultra-violet light, and a light-scattering phosphor layer absorbing the ultra-violet light and emitting a visible light is placed on the back side of the light-transmitting protecting film.

(11) The electroluminescence light-emitting layer comprises a phosphor emitting a blue light, and a phosphor layer absorbing the blue light and emitting a green light, a red light, or a white light is placed on the back side of the light-transmitting protecting film.

(12) The electroluminescence light-emitting layer comprises a phosphor emitting a blue light, and a light-scattering phosphor layer absorbing the blue light and emitting a green light, a red light, or a white light is placed on the back side of the light-transmitting protecting film.

For the EL devices of the tenth and eleventh aspects of the invention, the following embodiments are preferred.

(1) A light-scattering, high refraction layer which comprises as main component a material having a refractive index of 80% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 40% or more of a light emitted by the electroluminescence light-emitting layer toward a front side enters the light-scattering, high refraction layer.

(2) The light-scattering, high refraction layer comprises as main component a material having a refractive index of 95% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 70% or more of a light emitted by the electroluminescence light-emitting layer toward a front side enters the light-scattering, high refraction layer.

(3) The light-scattering, high refraction layer comprises as main component a material having a refractive index of 99% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 85% or more of a light emitted by the electroluminescence light-emitting layer toward a front side enters the light-scattering, high refraction layer.

(4) The back face sheet is a light-scattering reflective, high refraction sheet which comprises as main component a material having a refractive index of 95% or higher based on a refractive index of the electroluminescence light-emitting layer, and a refractive index of material placed between the light-emitting layer and the back face sheet is adjusted, whereby 70% or more of a light emitted by the electroluminescence light-emitting particles toward a back side enters the back face sheet.

(5) The back face sheet is a light-scattering reflective, high refraction sheet which comprises as main component a material having a refractive index of 99% or higher based on a refractive index of the electroluminescence light-emitting layer, and a refractive index of any material placed between the light-emitting layer and the back face sheet is adjusted, whereby 85% or more of a light emitted by the electroluminescence light-emitting particles toward a back side enters the back face sheet.

(6) The back face sheet comprises ceramic material.

(7) The back face sheet is a composite of a glass sheet and a light-scattering, high refraction layer.

(8) The electroluminescence light-emitting layer comprises a phosphor emitting a visible light.

(9) The electroluminescence light-emitting layer comprises two or more phosphor layers having different color hues from each other which are placed in areas separated from each other.

(10) There are placed a color filter layer and/or an ND filter layer between the light-transmitting front electrode and the light-transmitting protecting film.

(11) The electroluminescence light-emitting layer comprises a phosphor emitting a ultra-violet light, and a phosphor layer absorbing the ultra-violet light and emitting a visible light is placed on the back side of the light-transmitting protecting film.

(12) The electroluminescence light-emitting layer comprises a phosphor emitting a ultra-violet light, and a light-scattering phosphor layer absorbing the ultra-violet light and emitting a visible light is placed on the back side of the light-transmitting protecting film.

(13) The electroluminescence light-emitting layer comprises a phosphor emitting a blue light, and a phosphor layer absorbing the blue light and emitting a green light, a red light or a white light is placed on the back side of the light-transmitting protecting film.

(14) The electroluminescence light-emitting layer comprises a phosphor emitting a blue light, and a light-scattering phosphor layer absorbing the blue light and emitting a green light, a red light, or a white light is placed on the back side of the light-transmitting protecting film.

(15) The electroluminescence light-emitting layer is a thin phosphor layer, or a phosphor particle-dispersed layer comprising phosphor particles dispersed in a dielectric material layer having a refractive index of 80% or higher based on the refractive index of the phosphor particle.

For the EL devices of the twelfth to fourteenth aspects of the invention, the following embodiments are preferred.

(1) The light-scattering, high refraction layer comprises as main component a material having a refractive index of 95% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 70% or more of a light emitted by the electroluminescence light-emitting layer toward a front side enters the light-scattering, high refraction layer.

(2) The light-scattering, high refraction layer comprises as main component a material having a refractive index of 99% or higher based on a refractive index of the electroluminescence light-emitting layer is placed between the front light-transmitting electrode and the front protecting film, and a refractive index of material placed between the light-emitting layer and the light-scattering, high refraction layer is adjusted, whereby 85% or more of a light emitted by the electroluminescence light-emitting layer toward a front side enters the light-scattering, high refraction layer.

(3) The opaque back face sheet showing light reflection by a light-scattering effect comprises ceramic material.

(4) The opaque back face sheet showing light reflection by a light-scattering effect is a composite of a glass sheet and a light-scattering, high refraction layer.

(5) The electroluminescence light-emitting layer comprises a phosphor emitting a visible light.

(6) The electroluminescence light-emitting layer comprises two or more phosphor layers having different color hues from each other which are placed in areas separated from each other.

(7) There are placed a color filter layer and/or an ND filter layer between the light-scattering, high refraction layer and the light-transmitting protecting film.

(8) The electroluminescence light-emitting layer comprises a phosphor emitting a ultra-violet light, and a phosphor layer absorbing the ultra-violet light and emitting a visible light is placed on the front side of the light-scattering, high refraction layer.

(9) The electroluminescence light-emitting layer comprises a phosphor emitting a ultra-violet light, and a light-scattering high refraction phosphor layer is provided as the light-scattering, high refraction layer.

(10) The electroluminescence light-emitting layer comprises a phosphor emitting a blue light, and a phosphor layer absorbing the blue light and emitting a green light, a red light, or a white light is placed on the front side of the light-scattering, high refraction layer.

(11) The electroluminescence light-emitting layer comprises a phosphor emitting a blue light, and a light-scattering high refraction phosphor layer absorbing the blue light and emitting a green light, a red light, or a white light is provided as the light-scattering, high refraction layer.

The constitutions of the electroluminescence devices according to the invention are described below in more detail, by referring to the attached drawings which illustrate their representative constitutions.

In the present specification, the term of high refraction means that the refractive index is 80% or higher (preferably 95% or higher, more preferably 99% or higher) based on the refractive index of the dielectric material phase in the light-emitting layer. The material or layer having the high refractive index means a material or a layer is a material or a layer having such a high refractive index.

Fig. 3 shows a representative constitution of the dispersion EL device of the first aspect according to the invention. The EL device comprises a back light-transmitting electrode 32b, a light-emitting layer, a front light-transmitting electrode 32a, and a light-transmitting protecting film 37 (or a wavelength-converting phosphor layer, a color filter layer, or their combination) laid on an opaque back face substrate 31b showing light-scattering reflection. The light-emitting layer comprises phosphor particles 33 (particle size generally is in the range of 30 nm to 5 $\mu$m, preferably 50 nm to 2 $\mu$m) dispersed in a dielectric material phase 35, and shows a light-scattering property.

By applying an alternating voltage (several tens V to several hundreds V, frequency 30 Hz to 10 KHz, the waveform is optional but preferably is a sine wave) between the light-transmitting electrode 32a arranged on the front side (lower side in the figure) and the light-transmitting back electrode 32b, the light-emitting layer emits a light under electric field. The emitted light is extracted through the front protecting film 37. There may be provided various auxiliary layers between the layers of the EL device. Such modification can be applied to the EL devices of the constitutions described below.

Fig. 4 shows an alternative representative constitution of the dispersion EL device of the first aspect according to the invention. The EL device comprises a light-transmitting back electrode 32b, a light-emitting layer, a light-transmitting front electrode 32a, and a light-transmitting protecting film 37 (or a wavelength-converting phosphor layer, a color filter layer, or their combination) laid on an opaque back face substrate 31b showing light-scattering reflection. The light-emitting layer comprises complex phosphor particles composed of phosphor particles 33 (particle size generally is in the range of 30 nm to 5 $\mu$m, preferably 50 nm to 2 $\mu$m) coated with a coating layer 40 (layer thickness generally is in the range of 100 nm to several tens $\mu$m) dispersed in a dielectric material phase 35 (preferably comprising an inorganic material, or a complex material comprising inorganic fine particles placed in an organic material), and shows a light-scattering property.

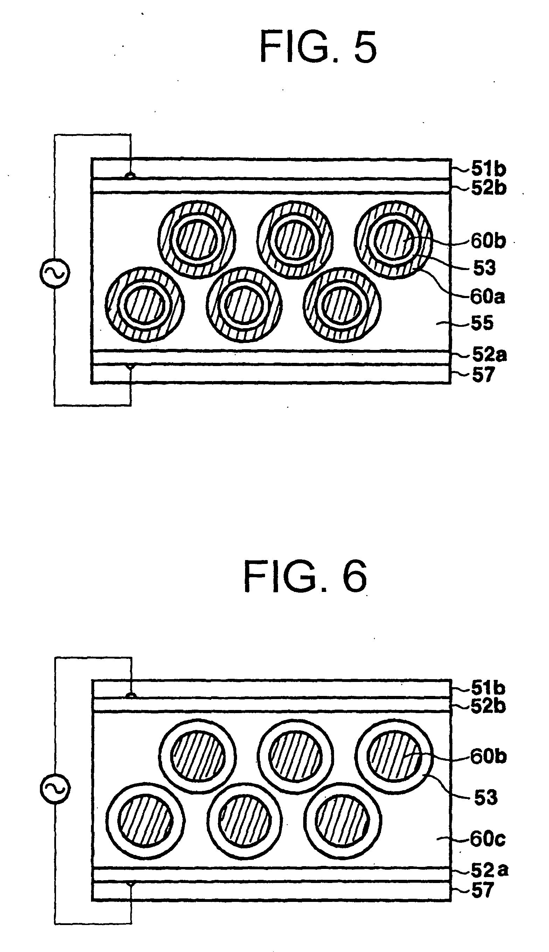

Fig. 5 shows a representative constitution of the dispersion EL device of the second aspect according to the invention. The EL device comprises a light-transmitting back electrode 52b, a light-emitting layer, a light-transmitting front electrode 52a, and a light-transmitting protecting film 57 laid on a back light-reflecting layer (or light reflecting substrate) 51b. The light-emitting layer comprises complex phosphor particles composed of dielectric material cores (in the spherical form or in different form) 60b coated with a phosphor layer (thickness generally is in the range of 30 nm to 50 $\mu$m, preferably 50 nm to 2 $\mu$m) which is further coated with a coating layer 60a dispersed in a high dielectric constant-organic polymer phase 55, and shows a light-scattering property.

By applying an alternating current between the light-transmitting electrode 52a arranged on the front side (lower side in the figure) and the light-transmitting back electrode 52b, the light-emitting layer emits a light under electric field. The emitted light is extracted through the front protecting film 57.

The high dielectric constant-organic polymer employed in the above-described constitution can be a high dielectric constant-cyanoethylated cellulose resin (cyanoethylated cellulose, cyanoethylated hydroxycellulose, cyanoethylated pullulan, etc.), and may comprise high dielectric constant-super fine particles (diameter: several nm to several $\mu$m) of $BaTiO_3$, $SrTiO_3$, $TiO_2$, $Y_2O_3$ or the like dispersed in a polymer (having not so high dielectric constant) such as styrene resin, silicone resin, epoxy resin, or fluorinated vinylidene resin.

Fig. 6 shows a representative constitution of the dispersion EL device of the third aspect according to the invention. The EL device comprises a light-transmitting back electrode 52b having a high refractive index, a light-emitting layer, a light-transmitting front electrode 52a, and a light-transmitting protecting film 57 (or a wavelength-converting phosphor layer, a color filter layer, or their combination) laid on a light-reflective, high refraction back layer (which may serve a substrate) 51b. The light-emitting layer comprises complex phosphor particles composed of spherical dielectric material core 60b coated with a phosphor layer 53 (layer thickness generally is in the range of 30 nm to 5 $\mu$m, preferably 50 nm to 2 $\mu$m) dispersed in a high refraction, high dielectric constant medium phase 60c (preferably comprising an inorganic material, or a complex material comprising inorganic super-fine particles placed in an organic material).

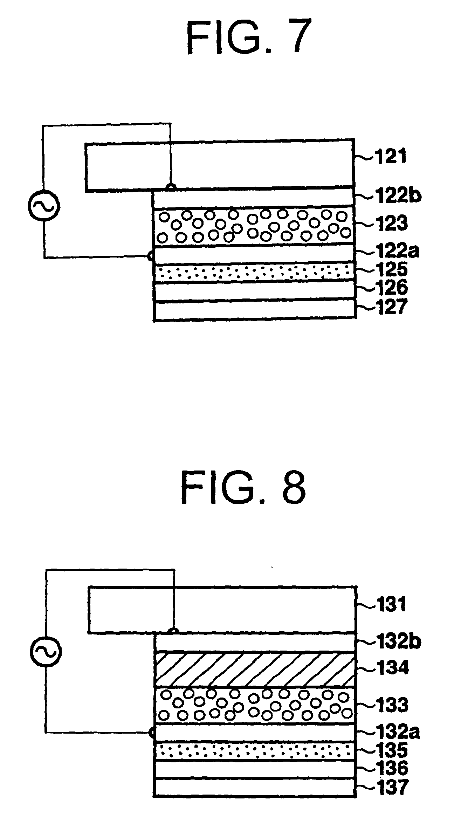

Fig. 7 shows a constitution of the dispersion EL device of the fourth aspect according to the invention. The EL device of Fig. 7 comprises a light-transmitting back electrode (ITO, thickness: 0.01 - 20 $\mu$m) 122b, a light-emitting layer comprising phosphor particles dispersed and supported in a dielectric material phase (thickness: 2 - 50 $\mu$m, preferably 5 - 20 $\mu$m, different phosphors emitting lights of color hues of R, G and B are placed in divided areas) 123, a light-transmitting front high refraction electrode 122a, a light-scattering, high refraction layer (thickness 1 - 50 $\mu$m) 125, a color filter layer (R, G, B) 126, and a light-transmitting protecting layer 127 are arranged in order on (under, in Fig. 7) a high light-scattering reflective ceramic substrate (opaque back face sheet) 121 placed on the back side (side opposite to the side on which a light emitted in the device is extracted). In the EL device of Fig. 7, the layers other than the ceramic substrate 121 on the back side are essentially light-transmitting layers or opaque layers capable of transmitting a certain amount of light.

The opaque back face sheet 121 can comprise a glass sheet and an opaque layer laid on the glass sheet. By applying an alternating voltage between the light-transmitting electrode 122a arranged on the front side (lower side in the figure) of the dispersion EL device of Fig. 7 and the back electrode 112b, the light-emitting layer 123 emits a light under electric field. The emitted light is extracted through the front protecting film 127.

Fig. 8 shows another constitution of the dispersion EL device of the fourth aspect according to the invention. The EL device of Fig. 8 comprises a light-transmitting back electrode (ITO, thickness: 0.01 - 20 $\mu$m) 132b, a back insulating material layer (thickness: 0.3 - 100 $\mu$m) 134b, a light-emitting layer 133 comprising phosphor particles dispersed and supported in a dielectric material phase, a light-transmitting front electrode 132a, a light-scattering, high refraction layer (thickness 0.3 - 20 $\mu$m) 135, a color filter layer (R, G, B) 136, and a light-transmitting protecting layer 137 are arranged in order on a high light-scattering reflective ceramic substrate 131 placed on the back side. In the EL device of Fig. 8, the layers other than the ceramic substrate 131 on the back side are essentially light-transmitting layers or opaque layers capable of transmitting a certain amount of light.

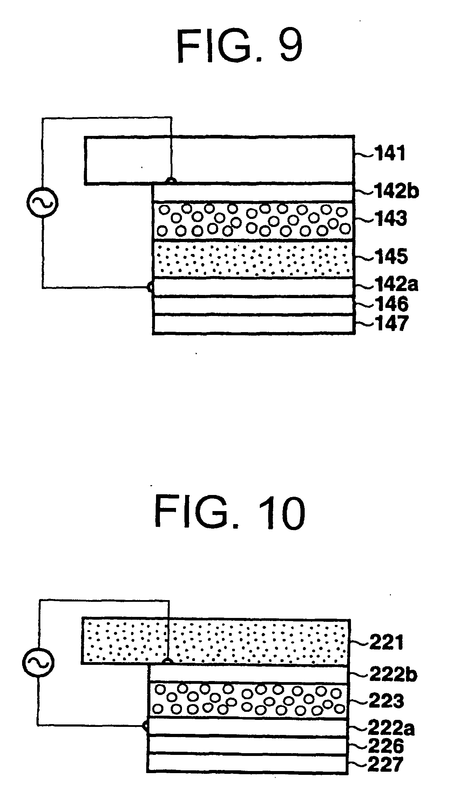

Fig. 9 shows a further constitution of the dispersion EL device of the fourth aspect according to the invention. The EL device of Fig. 9 comprises a light-transmitting back electrode (ITO, thickness: 0.01 - 20 $\mu$m) 142b, a light-emitting layer 143 comprising phosphor particles dispersed and supported in a dielectric material phase, a light-scattering, high refraction, insulating material layer (thickness: 1 - 50 $\mu$m) 145, a light-transmitting high refraction front electrode (thickness 0.01 - 20 $\mu$m) 142a, a color filter layer (R, G, B) 146, and a light-transmitting protecting layer 157 are arranged in order on a high light-scattering reflective ceramic substrate 141 placed on the back side. In the EL device of Fig. 9, the layers other than the ceramic substrate 141 on the back side are essentially light-transmitting layers or opaque layers capable of transmitting a certain amount of light.

Fig. 10 shows a constitution of the dispersion EL device of the fifth aspect according to the invention. The EL device of Fig. 10 comprises a light-transmitting back electrode having a high refractive index (ITO, thickness: 0.01 - 20 $\mu$m) 222b, a light-emitting layer comprising phosphor particles dispersed and supported in a dielectric material phase (thickness: 2 - 50 $\mu$m, preferably 5 - 20 $\mu$m, different phosphors emitting lights of color hues of R, G and B are placed in divided areas) 223, a light-transmitting front electrode 222a, a color filter layer (R, G, B) 226, and a light-transmitting protecting layer 227 are arranged in order on a high light-scattering reflective, high refraction ceramic substrate (light-scattering reflective back face sheet having a high refractive index) 221 placed on the back side (side opposite to the side on which a light emitted in the device is extracted). In the EL device of Fig. 10, the layers other than the high refraction ceramic substrate 221 on the back side are essentially light-transmitting layers or opaque layers capable of transmitting a certain amount of light.

The light-scattering reflective, high refraction back face sheet 221 can comprise a glass sheet and a light-scattering, high refraction layer laid on the glass sheet.

By applying an alternating voltage between the light-transmitting electrode 222a arranged on the front side (lower side in the figure) and the back electrode 212b, the light-emitting layer 223 emits a light under electric field. The emitted light is extracted through the front protecting film 227.

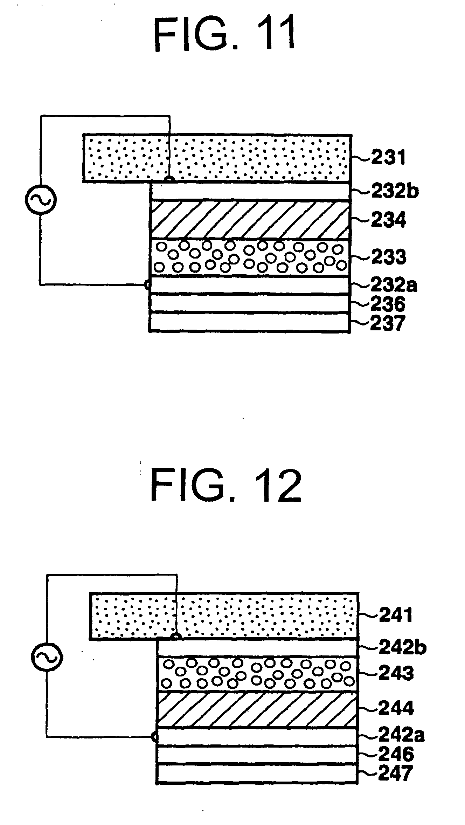

Fig. 11 shows a constitution of the dispersion EL device of the sixth aspect according to the invention. The EL device of Fig. 11 comprises a light-transmitting, high refraction, back electrode (ITO, thickness: 0.01 - 20 $\mu$m) 232b, a high refraction, back insulating material layer (thickness: 0.3 - 50 $\mu$m) 234, a light-emitting layer 233 comprising phosphor particles dispersed and supported in a dielectric material phase, a light-transmitting front electrode 232a, a color filter layer (R, G, B) 236, and a light-transmitting protecting layer 237 are arranged in order on a high light-scattering reflective, high refraction ceramic substrate 231 placed on the back side. In the EL device of Fig. 11, the layers other than the high refraction ceramic substrate 231 on the back side are essentially light-transmitting layers or opaque layers capable of transmitting a certain amount of light.

Fig. 12 shows a constitution of the dispersion EL device of the seventh aspect according to the invention. The EL device of Fig. 12 comprises a light-transmitting, high refraction, back electrode (ITO, thickness: 0.01 - 20 $\mu$m) 242b, a light-emitting layer 243 comprising phosphor particles dispersed and supported in a dielectric material phase, a high refraction, front insulating material layer (thickness: 0.3 - 1 $\mu$m) 244a, a light-transmitting, high refraction front electrode (thickness: 0.01 - 20 $\mu$m) 242a, a color filter layer (R, G, B) 246, and a light-transmitting protecting layer 247 are arranged in order on a high light-scattering reflective, high refraction ceramic substrate 241 placed on the back side. Also in the EL device of Fig. 12, the layers other than the ceramic substrate 241 on the back side are essentially light-transmitting layers or opaque layers capable of transmitting a certain amount of light.

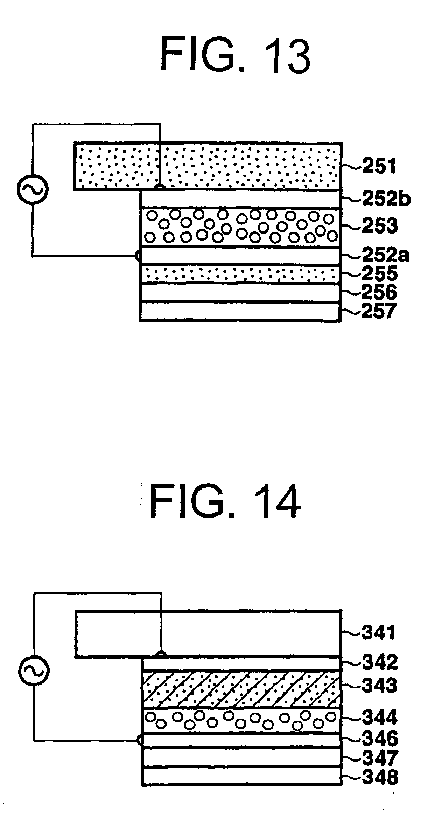

Fig. 13 shows another constitution of the dispersion EL device of the fifth aspect according to the invention. The EL device of Fig. 13 comprises a light-transmitting, high refraction back electrode (ITO, thickness: 0.01 - 20 $\mu$m) 252b, a light-emitting layer 253 comprising phosphor particles dispersed and supported in a dielectric material phase, a light-transmitting front electrode (thickness: 0.01 - 20 $\mu$m) 252a, a light-scattering, high refraction layer (thickness: 1 - 50 $\mu$m) 255, a color filter layer (R, G, B) 256, and a light-transmitting protecting layer 257 are arranged in order on a high light-scattering reflective, high refraction ceramic substrate 251 placed on the back side. Also in the EL device of Fig. 13, the layers other than the ceramic substrate 251 on the back side are essentially light-transmitting layers or opaque layers capable of transmitting a certain amount of light.

Fig. 14 shows another constitution of the dispersion EL device of the eighth aspect according to the invention. The EL device of Fig. 14 comprises a back electrode (metal electrode or non light-transmitting electrode) 342, a light-scattering reflective, high refraction, insulating material layer having a diffusion reflectance of 50% or more (thickness: 10 - 100 μm) 343, a light-emitting layer comprising phosphor particles dispersed and supported in a dielectric material phase (thickness: 2 - 50 μm, preferably 5 - 20 μm, different phosphors emitting lights of color hues of R, G and B are placed in divided areas) 344, a light-transmitting front electrode 346, a color filter layer (R, G, B) 347, and a light-transmitting protecting layer 348 are arranged in order on a transparent or opaque substrate 341 made of glass, metal or ceramic placed on the back side (side opposite to the side on which a light emitted in the device is extracted). In the EL device of Fig. 14, the layers other than the back substrate 341, the back electrode 342 and the light-scattering reflective, high refraction, insulating material layer 343 on the back side are essentially light-transmitting layers or opaque layers capable of transmitting a certain amount of light.

By applying an alternating voltage between the light-transmitting electrode 346 arranged on the front side (lower side in the figure) and the back electrode 342, the light-emitting layer 344 emits a light under electric field. The emitted light is extracted through the front protecting film 348.

Fig. 15 shows a constitution of the thin film EL device of the ninth aspect according to the invention. The EL device of Fig. 15 comprises a back electrode (metal electrode or non light-transmitting electrode) 332, a light-scattering reflective, high refraction, insulating material layer having a diffusion reflectance of 50% or more (thickness: 10 - 100 μm) 333, a light-emitting layer comprising a thin phosphor film (thickness: 0.1 - 3 μm, different phosphors emitting lights of color hues of R, G and B are placed in divided areas) 334, a front insulating material layer (thickness: 0.3 - 1 μm) 335, a light-transmitting front electrode 336, a color filter layer (R, G, B) 337, and a light-transmitting protecting layer 338 are arranged in order on a transparent or opaque substrate 331 made of glass, metal or ceramic placed on the back side (side opposite to the side on which a light emitted in the device is extracted). In the EL device of Fig. 15, the layers other than the back face substrate 331, the back electrode 332 and the light-scattering reflective, high refraction, insulating material layer 333 on the back side are essentially light-transmitting layers or opaque layers capable of transmitting a certain amount of light.

By applying an alternating voltage between the light-transmitting electrode 336 arranged on the front side (lower side in the figure) and the back electrode 332, the light-emitting layer 334 emits a light under electric field. The emitted light is extracted through the front protecting film 338.

In the case that the light-emitting layer 334 is a thin film phosphor layer, it can be prepared utilizing various deposition methods or coating methods (such as sol-gel method). Auxiliary layers such as a buffer layer may be provided between the light-emitting layer 334 and the front and/or back insulating material layers 333, 335.

Fig. 16 shows a constitution of the thin film EL devices of the tenth and eleventh aspects according to the invention. The EL device of Fig. 16 comprises a light-transmitting, high refraction back electrode (ITO, thickness: 0.01 - 20 μm) 432, a high refraction, back insulating material layer (thickness: 0.3 - 50 μm) 434b, a light-emitting layer comprising a thin phosphor film (thickness: 0.1 - 3 μm, different phosphors emitting lights of color hues of R, G and B are placed in divided areas) 433, a front insulating material layer (thickness: 0.3 - 1 μm) 434a, a light-transmitting front electrode 432a, a color filter layer (R, G, B) 436, and a light-transmitting protecting layer 437 are arranged in order on a high refraction ceramic substrate 431b showing a high light-scattering reflection placed on the back side (side opposite to the side on which a light emitted in the device is extracted). In the EL device of Fig. 16, the layers other than the high refraction, back ceramic substrate 431b are essentially light-transmitting layers or opaque layers capable of transmitting a certain amount of light.

By applying an alternating voltage between the light-transmitting electrode 432a arranged on the front side (lower side in the figure) and the back electrode 432b, the light-emitting layer 433 emits a light under electric field. The emitted light is extracted through the front protecting film 437.

The light-emitting thin film layer 433 can be prepared utilizing various deposition methods or coating methods (such as sol-gel method). Auxiliary layers such as a buffer layer may be provided between the light-emitting layer 433 and the front and/or back insulating material layers 434a, 434b.

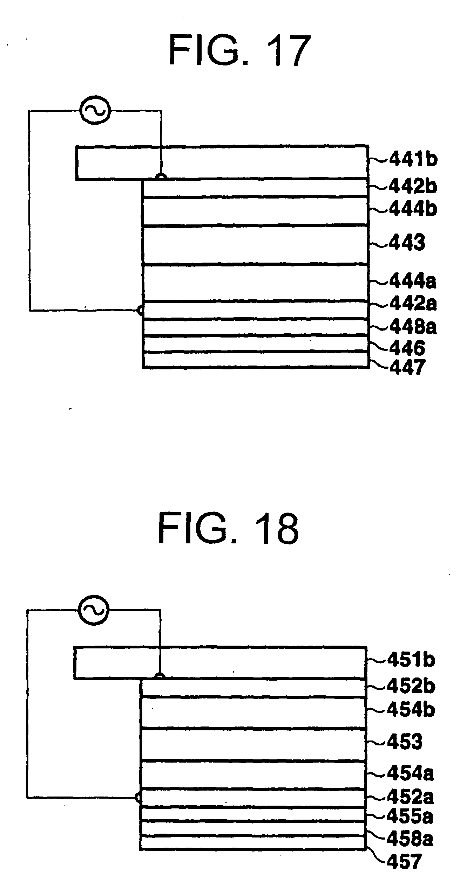

Fig. 17 shows another constitution of the thin film EL devices of the tenth and eleventh aspects according to the invention. The EL device of Fig. 17 comprises a light-transmitting, high refraction back electrode (ITO, thickness: 0.01 - 20 μm) 442b, a high refraction, back insulating material layer (thickness: 0.3 - 50 μm) 444b, a light-emitting layer comprising a thin phosphor film (thickness: 0.1 - 3 μm, different phosphors emitting lights of color hues of R, G and B are placed in divided areas) 443, a light-scattering reflective, front insulating material layer (thickness: 0.3 - 20 μm) 444a, a light-transmitting front electrode (thickness: 0.01 - 20 μm) 442a, a front phosphor layer (thickness: 5 - 20 μm, W (non-emitting), or G (green light-emitting), or R (red light-emitting)) 448a, a color filter layer (R, G, B) 446, and a light-transmitting protecting layer 447 are arranged in order on a high refraction ceramic substrate 441b showing a high light-scattering reflection placed on the back side. Also in the EL device of Fig. 17, the layers other than the high refraction, back ceramic substrate 441b are essentially light-transmitting layers or opaque layers capable of transmitting a certain amount of light.

Fig. 18 shows a further constitution of the thin film EL devices of the tenth and eleventh aspects according to the invention. The EL device of Fig. 18 comprises a light-transmitting, high refraction back electrode (ITO, thickness: 0.01 - 20 µm) 452b, a high refraction, back insulating material layer (thickness: 0.3 - 50 µm) 454b, a light-emitting layer comprising a thin phosphor film (thickness: 0.1 - 3 µm, different phosphors emitting lights of color hues of R, G and B are placed in divided areas) 453, a light-scattering, high refraction, front insulating material layer (thickness: 0.3 - 1 µm) 454a, a light-transmitting, high refraction front electrode (thickness: 0.01 - 20 µm) 452a, a front phosphor layer (thickness: 5 - 20 µm, W (non-emitting), or G (green light-emitting), or R (red light-emitting)) 458a, and a light-transmitting protecting layer 457 are arranged in order on a high refraction ceramic substrate 451b showing a high light-scattering reflection placed on the back side. Also in the EL device of Fig. 18, the layers other than the high refraction, back ceramic substrate 451b are essentially light-transmitting layers or opaque layers capable of transmitting a certain amount of light.

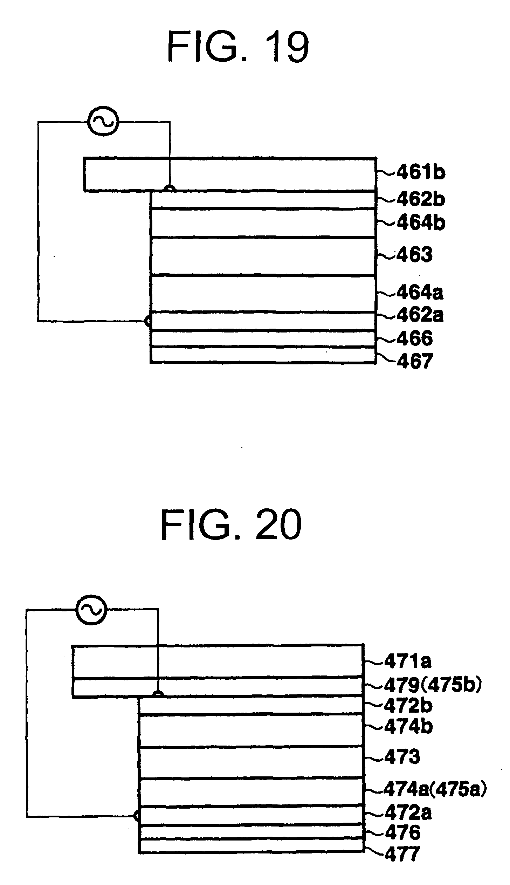

Fig. 19 shows a still further constitution of the thin film EL devices of the tenth and eleventh aspects according to the invention. The EL device of Fig. 19 comprises a light-transmitting, high refraction back electrode (ITO, thickness: 0.01 - 20 µm) 462b, a high refraction, back insulating material layer (thickness: 0.3 - 100 µm) 464b, a light-emitting layer comprising a thin phosphor film (thickness: 0.1 - 3 µm, different phosphors emitting lights of color hues of R, G and B are placed in divided areas) 463, a light-scattering, high refraction, front insulating material layer (thickness: 0.3 - 20 µm) 464a, a light-transmitting front electrode (thickness: 0.01 - 20 µm) 462a, a color filter layer (R, G, B) 466, and a light-transmitting protecting layer 467 are arranged in order on a high refraction ceramic substrate 461b showing a high light-scattering reflection placed on the back side. Also in the EL device of Fig. 19, the layers other than the back ceramic substrate 461b are essentially light-transmitting layers or opaque layers capable of transmitting a certain amount of light.

Fig. 20 shows a still further constitution of the thin film EL devices of the tenth and eleventh aspects according to the invention. The EL device of Fig. 20 comprises a light-transmitting, high refraction back electrode (ITO, thickness: 0.01 - 20 µm) 472b, a high refraction, back insulating material layer (thickness: 0.3 - 100 µm) 474b, a light-emitting layer comprising a thin phosphor film (thickness: 0.1 - 3 µm, different phosphors emitting lights of color hues of R, G and B are placed in divided areas) 473, a light-scattering reflective, high refraction, front insulating material layer (also serving as a light-scattering layer, thickness: 0.3 - 20 µm) 474a or 475a, a light-transmitting front electrode 472a, a color filter layer (R, G, B) 476, and a light-transmitting protecting layer 477 are arranged in order on a light-scattering reflective, high refraction substrate composed of a glass substrate 471a on the back side and a light-scattering, high refraction layer (thickness: 10 - 100 µm) 479 or 475b placed on the back side. Also in the EL device of Fig. 20, the layers other than the back light-scattering reflective, high refraction substrate 479 are essentially light-transmitting layers or opaque layers capable of transmitting a certain amount of light.

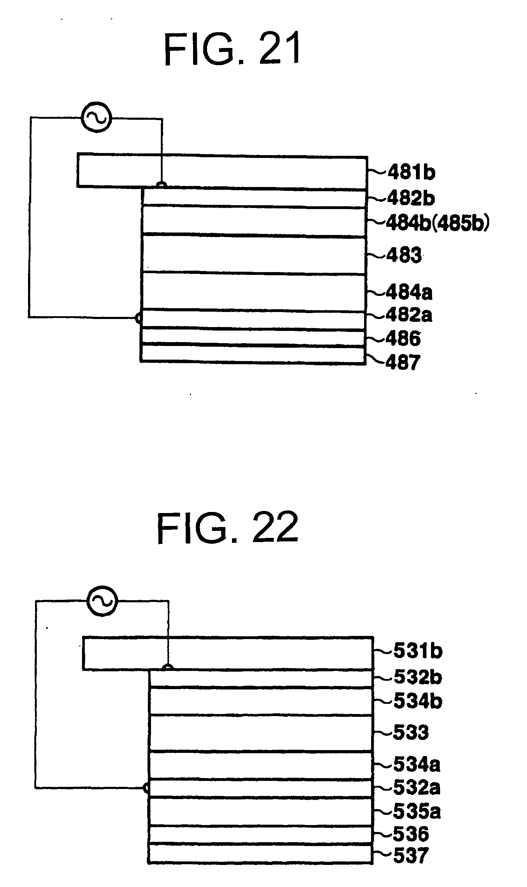

Fig. 21 shows a still further constitution of the thin film EL devices of the tenth and eleventh aspects according to the invention. The EL device of Fig. 21 comprises a light-transmitting back electrode (ITO, thickness: 0.01 - 20 µm) or a metal electrode 482b, a high refraction, back insulating material layer (also serving as a light-scattering layer, thickness: 0.3 - 100 µm) 484b (485b), a light-emitting layer comprising a thin phosphor film (thickness: 0.1 - 3 µm, which comprises a UV light-emitting phosphor) 483, a front insulating material layer (thickness: 0.3 - 1 µm) 484a, a light-transmitting front electrode (thickness: 0.01 - 20 µm) 482a, a color filter layer (R, G, B) 486, and a light-transmitting protecting layer 487 are arranged in order on a high light-scattering reflective, high refraction ceramic substrate or a glass substrate 481b on the back side. Also in the EL device of Fig. 21, the layers other than the high refraction back ceramic substrate 481b are essentially light-transmitting layers or opaque layers capable of transmitting a certain amount of light.

Fig. 22 shows a constitution of the thin film EL devices of the twelfth to fourteenth aspects according to the invention. The EL device of Fig. 22 comprises a light-transmitting back electrode (ITO, thickness: 0.01 - 20 µm) 532b, a back insulating material layer (thickness: 0.3 - 100 µm) 534b, a light-emitting layer comprising a thin phosphor film (thickness: 0.1 - 3 µm, different phosphors emitting lights of color hues of R, G and B are placed in divided areas) 533, a high refraction, front insulating material layer (thickness: 0.3 - 1 µm) 534a, a light-transmitting, high refraction front electrode 532a, a light-scattering, high fraction layer (thickness: 1 - 50 µm) 535a, a color filter layer (R, G, B) 536, and a light-transmitting protecting layer 537 are arranged in order on a ceramic substrate 531b showing a high light-scattering reflection placed on the back side (side opposite to the side on which a light emitted in the device is extracted). In the EL device of Fig. 22, the layers other than the back ceramic substrate 531b are essentially light-transmitting layers or opaque layers capable of transmitting a certain amount of light.

By applying an alternating voltage between the light-transmitting electrode 532a arranged on the front side (lower side in the figure) and the back electrode 532b, the light-emitting layer 533 emits a light under electric field. The emitted light is extracted through the front protecting film 537.

The light-emitting thin film layer 533 can be prepared utilizing various deposition methods or coating methods (such as sol-gel method). Auxiliary layers such as a buffer layer may be provided between the light-emitting layer 533 and the front and/or back insulating material layers 534a, 534b.

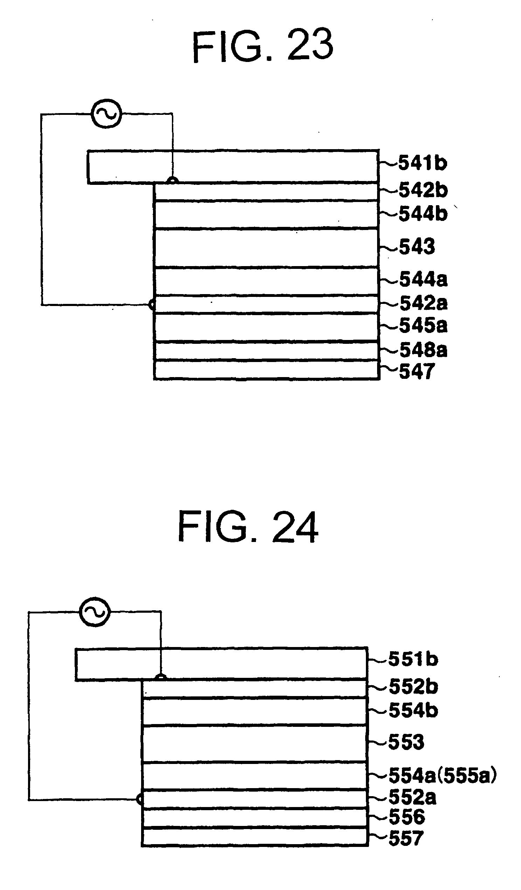

Fig. 23 shows another constitution of the thin film EL devices of the twelfth to fourteenth aspects according to the invention. The EL device of Fig. 23 comprises a light-transmitting back electrode (ITO, thickness: 0.01 - 20 µm) 542b, a back insulating material layer (thickness: 0.3 - 100 µm) 544b, a light-emitting layer comprising a thin phosphor film (thickness: 0.1 - 3 µm, different phosphors emitting lights of color hues of R, G and B are placed in divided areas) 543, a high refraction, front insulating material layer (thickness: 0.3 - 1 µm) 544a, a light-transmitting front electrode 542a, a light-scattering, high fraction layer (thickness: 1 - 50 µm) 545a, a front phosphor layer (thickness: 5 - 20 µm, W (non-emitting), or G (green light-emitting), or R (red light-emitting)) 548a, and a light-transmitting protecting layer 547 are arranged in order on a ceramic substrate 541b showing a high light-scattering reflection placed on the back side. Also in the EL device of Fig. 23, the layers other than the back ceramic substrate 541b are essentially light-transmitting layers or opaque layers capable of transmitting a certain amount of light.

Fig. 24 shows a further constitution of the thin film EL devices of the twelfth to fourteenth aspects according to the invention. The EL device of Fig. 24 comprises a light-transmitting back electrode (ITO, thickness: 0.01 - 20 µm) 552b, a back insulating material layer (thickness: 0.3 - 50 µm) 554b, a light-emitting layer comprising a thin phosphor film (thickness: 0.1 - 3 µm, comprising a UV light-emitting phosphor) 553, a high refraction, front insulating material layer (thickness: 0.3 - 20 µm, also serving as a light-scattering layer) 554a or 555a, a light-transmitting, high refraction front electrode (thickness: 0.01 - 20 µm) 552a, a color filter layer (R, G, B) 556, and a light-transmitting protecting layer 557 are arranged in order on a ceramic substrate 551b showing a high light-scattering reflection placed on the back side. Also in the EL device of Fig. 24, the layers other than the back ceramic substrate 551b are essentially light-transmitting layers or opaque layers capable of transmitting a certain amount of light.

Fig. 25 shows a still further constitution of the thin film EL devices of the twelfth to fourteenth aspects according to the invention. The EL device of Fig. 25 comprises a light-transmitting back electrode (ITO, thickness: 0.01 - 20 µm) 562b, a back insulating material layer (thickness: 0.3 - 50 µm) 564b, a light-emitting layer comprising a thin phosphor film (thickness: 0.1 - 3 µm, different phosphors emitting lights of color hues of R, G and B are placed in divided areas) 563, a high refraction, front insulating material layer (thickness: 0.3 - 20 µm, also serving as a light-scattering layer) 564a or 565a, a light-transmitting front electrode 562a, a color filter layer (R, G, B) 566, and a light-transmitting protecting layer 567 are arranged in order on a light-scattering reflective substrate composed of a glass substrate 561a on the back side and a light-scattering reflective layer (thickness: 10 - 150 µm) placed on the back side. Also in the EL device of Fig. 25, the layers other than the back light-scattering reflective layer 569 are essentially light-transmitting layers or opaque layers capable of transmitting a certain amount of light.

Fig. 27 shows a constitution of a multi-color image-displaying dispersion EL device having a composite of plural light-emitting layers according to the invention. This EL device comprises a light-transmitting back electrode (ITO, thickness: 0.01 - 20 µm) 642a, a first light-emitting layer comprising phosphor particles dispersed and supported in a dielectric material phase (thickness: 2 - 50 µm, preferably 5 - 20 µm, a phosphor emitting a light of a color hue of R, G, or B is uniformly placed) 643, a high refraction, light-transmitting electrode 642b, a second light-emitting layer comprising phosphor particles dispersed and supported in a dielectric material phase (thickness: 2 - 50 µm, preferably 5 - 20 µm, a phosphor emitting a light of a color hue which differs from the color hue of the phosphor placed in the first light-emitting layer is uniformly placed) 644, a high refraction, front light-transmitting electrode 642c, an insulating material layer (thickness: 0.3 - 100 µm) 645, a high refraction, back light-transmitting electrode 642d, a third light-emitting layer comprising phosphor particles dispersed and supported in a dielectric material phase (thickness: 2 - 50 µm, preferably 5 - 20 µm, a phosphor emitting a light of a color hue which differs from the color hues of the phosphors placed in the first and second light-emitting layers are uniformly placed) 646, a high refraction, front light-transmitting electrode 642e, a light-scattering, high refraction layer (thickness: 1 - 50 µm) 647, and a light-transmitting protecting layer 648 are arranged in order on a ceramic substrate (opaque back face sheet) 641 showing a high light-scattering reflection placed on the back side (side opposite to the side on which a light emitted in the device is extracted). In the EL device of Fig. 27, the layers other than the back ceramic substrate 641 are essentially light-transmitting layers or opaque layers capable of transmitting a certain amount of light.

In the dispersion EL device of Fig. 27, the light-emitting layer 643 emits a light under electric field, by applying an alternating voltage between the light-transmitting electrode 642a and the light-transmitting electrode 642b. In the same way, the light-emitting layer 644 emits a light under electric field, by applying an alternating voltage between the light-transmitting electrode 642b and the light-transmitting electrode 642c, and the light-emitting layer 646 emits a light under electric field, by applying an alternating voltage between the light-transmitting electrode 642d and the light-transmitting electrode 642e. By applying the alternating voltage in an optional way, the desired light-emission is taken from the front protecting film 648 through the light-scattering, high refraction layer 647.

There may be provided an insulating material layer between each light-emitting layer (phosphor layer) and the light-transmitting electrode. The EL device can have various auxiliary layers such as a buffer layer between the provided layers. These variations can be adopted in the various EL devices described below.

The opaque back face sheet 641 can be composed of a glass sheet and an opaque layer provided on the glass sheet.

Fig. 28 shows another constitution of a multi-color image-displaying dispersion EL device having a composite of plural light-emitting layers according to the invention. This EL device comprises a light-transmitting back electrode (ITO, thickness: 0.01 - 20 μm) 652a, a first light-emitting layer comprising phosphor particles dispersed and supported in a dielectric material phase (thickness: 2 - 50 μm, preferably 5 - 20 μm, a phosphor emitting a light of a color hue of R, G, or B is uniformly placed) 653, a light-transmitting, high refraction electrode 652b, a second light-emitting layer comprising phosphor particles dispersed and supported in a dielectric material phase (thickness: 2 - 50 μm, preferably 5 - 20 μm, a phosphor emitting a light of a color hue which differs from the color hue of the phosphor placed in the first light-emitting layer is uniformly placed) 654, a light-transmitting, high refraction electrode 652c, an insulating material layer (thickness: 0.3 - 100 μm) 655, a light-transmitting, high refraction back electrode 652d, a third light-emitting layer comprising phosphor particles dispersed and supported in a dielectric material phase (thickness: 2 - 50 μm, preferably 5 - 20 μm, a phosphor emitting a light of a color hue which differs from the color hues of the phosphors placed in the first and second light-emitting layers is uniformly placed) 656, a light-transmitting, high refraction front electrode 652e, and a light-transmitting protecting layer 658 are arranged in order on a high refraction ceramic substrate (light-scattering reflective, high refraction sheet) 651 showing a high light-scattering reflection placed on the back side (under the back side in Fig. 28). Also in the EL device of Fig. 28, the layers other than the high refraction, back ceramic substrate 651 are essentially light-transmitting layers or opaque layers capable of transmitting a certain amount of light.

In the dispersion EL device of Fig. 28, the light-emitting layer 653 emits a light under electric field, by applying an alternating voltage between the light-transmitting electrode 652a and the light-transmitting electrode 652b. In the same way, the light-emitting layer 654 emits a light under electric field, by applying an alternating voltage between the light-transmitting electrode 652b and the light-transmitting electrode 652c, and the light-emitting layer 656 emits a light under electric field, by applying an alternating voltage between the light-transmitting electrode 652d and the light-transmitting electrode 652e. By applying the alternating voltage in an optional way, the desired light-emission is taken from the front protecting film 658. The light emitted toward the back side by each light-emitting layer is reflected with scattering by the light refraction back ceramic substrate 651 and a portion of the reflected light is taken from the front protecting film 658.

The light-scattering reflective, high refraction sheet 651 can be composed of a glass sheet and a light-scattering, high refraction layer having a high light-scattering reflection provided on the glass sheet.

Fig. 29 shows a constitution of a multi-color image-displaying thin film EL device according to the invention. This EL device comprises a light-transmitting back electrode (ITO, thickness: 0.01 - 20 μm) 662a, an insulating material layer (thickness: 0.3 - 100 μm, the same hereinbelow) 665a, a first light-emitting layer comprising a phosphor film (thickness: 0.1 - 3 μm, made of a phosphor film emitting a light of hue of R, G, or B) 663, an insulating material layer 665b, a light-transmitting, high refraction electrode 662b, an insulating material layer 665c, a second light-emitting layer (made of a phosphor film emitting a light of hue of R, G, or B which differs from the hue of light of the first light-emitting layer) 664, an insulating material layer 665d, a light-transmitting, high refraction front electrode 662c, an insulating material layer (thickness: 0.3 - 100 μm) 665, a light-transmitting, high refraction back electrode 652d, a third light-emitting layer (made of a phosphor film emitting a light of hue of R, G, or B which differs from the hues of lights of the first and second light-emitting layers) 666, an insulating material layer 665g, a light-transmitting, high refraction front electrode 662e, a light-scattering, high refraction layer (thickness: 1 - 50 μm) 667, and a light-transmitting protecting layer 668 are arranged in order on a ceramic substrate (opaque back face sheet) 661 showing a high light-scattering reflection placed on (under, in Fig. 29) the back side (side opposite to the side on which a light emitted in the device is extracted). In the EL device of Fig. 29, the layers other than the back ceramic substrate 661 are essentially light-transmitting layers or opaque layers capable of transmitting a certain amount of light.

In the thin film EL device of Fig. 29, the light-emitting layer 663 emits a light under electric field, by applying an alternating voltage between the light-transmitting electrode 662a and the light-transmitting electrode 662b. In the same way, the light-emitting layer 664 emits a light under electric field, by applying an alternating voltage between the light-transmitting electrode 662b and the light-transmitting electrode 662c, and the light-emitting layer 666 emits a light under electric field, by applying an alternating voltage between the light-transmitting electrode 662d and the light-transmitting electrode 662e. By applying the alternating voltage in an optional way, the desired light-emission is taken from the front protecting film 668 through the light-scattering, high refraction layer 667.

Fig. 30 is a graph indicating a light extraction efficiency from parallel planes which explains the enhancement of a emission efficiency in the electroluminescence device of the invention. In more detail, a relationship between a refractive index ratio ($n_1/n_2$) and the extraction efficiency $\eta$ in the case that a light is extracted in a layer having a refractive index $n_2$ from a light-emitting layer having a refractive index $n_1$ is expressed by the graph of Fig. 30. The extraction efficiency $\eta$ decreases by 30%, 42%, and 55% in the case that the difference of refractive index is 5%, 10%, and 20%, respectively. The graph indicates the case, in consideration of a single surface of the light-emitting layer. In the case that a light advances both sides of the light-emitting layer and the light advancing on one side only is extracted, the extraction efficiency decreases to a half, unless no reflection on the opposite side is considered.

Materials and sizes of the substrate and various layers constituting the electroluminescence device of the invention are described below.

[Opaque substrate showing light-scattering reflection]

Representative examples of the opaque substrates showing light-scattering reflection are ceramic substrates. Examples of materials of the ceramic substrates include $Y_2O_3$, $Ta_2O_5$ , $BaTa_2O_6$ , $BaTiO_3$, $TiO_2$, $Sr(Zr,Ti)O_3$, $SrTiO_3$, $PbTiO_3$, $Al_2O_3$, $Si_3N_4$, ZnS, $ZrO_2$, $PbNbO_3$, and $Pb(Zr,Ti)O_3$. Alternatively, a transparent substrate such as glass sheet or a metal substrate coated with a light-scattering reflective layer can be employed. The light-scattering reflective layer can be prepared from the materials of the below-mentioned insulating material layer and the matrix components of the below-mentioned phosphors, provided that the materials and components have essentially no light absorption in the utilized wavelength region. The structure is prepared by forming areas (voids or particles having submicron level to several micron level) having different refractive indexes in the interior of the layer. The ceramic substrate can be prepared by heating a screen-printed material to form a sintered material.

[Glass substrate]

The representative examples are non-alkaline glass sheets (sheets of barium borosilicate glass and aluminosilicate glass).

[Light-scattering reflective layer]

The light-scattering reflective layer can be prepared from the materials of the below-mentioned insulating material layer and the matrix components of the below-mentioned phosphors, provided that the materials and components have essentially no light absorption in the utilized wavelength. The structure is prepared by forming areas (voids or particles having submicron level to several micron level) having different refractive indexes in the interior of the layer.

[Light-transmitting electrode]

There are mentioned ITO, ZnO:Al, complex oxides (described in JP-A-10-190028), GaN materials (described in JP-A-6-150723), $Zn_2In_2O_5$, (Zn, Cd,Mg) O- (B,Al, Ga,In, $Y)_2O_3$-(Si,Ge,Sn,Pb,Ti,Zr)$O_2$, (Zn,Cd, Mg) O- (B,Al,Ba,In,Y)$_2O_3$-(Si, Sn, Pb) O, material comprising $MgO$-$In_2O_3$, and $SnO_2$ materials (described in JP-A-8-262225, JP-A-8-264022, and JP-A-8-264023).

[Phosphors in the light-emitting layer]

UV (UV light-emitting phosphor): $ZnF_2$:Gd
B (blue light-emitting phosphor): $BaAl_2S_4$:Eu, CaS: Pb, SrS:Ce, SrS:Cu, $CaGa_2S_4$:Ce
G (green light-emitting phosphor): (Zn,Mg)S:Mn, ZnS:Tb,F, $Ga_2O_3$:Mn
R (red light-emitting phosphor): (Zn,Mg)S:Mn, CaS: Eu, ZnS : Sm, F, $Ga_2O_3$:Cr

[Material for coating phosphor particle]

There can be mentioned $Y_2O_3$, $Ta_2O_5$, $BaTa_2O_6$, $BaTiO_3$, $TiO_2$, $Sr(Zr,Ti)O_3$, $SrTiO_3$, $PbTiO_3$, $Al_2O_3$, $Si_3N_4$, ZnS, $ZrO_2$, $PbNbO_3$, and $Pb(Zr,Ti)O_3$. It is preferred that the material has a high dielectric constant and high resistance to dielectric breakdown, and forms an interfacial level on the phosphor particle surface to serve as an electron-supplying source. The material can be light-scattering material such as a sintered material, provided that the layer does not prominently decrease the dielectric constant of the layer.

[Material for insulating material layer and insulating material phase of light-emitting layer]

(1) A high dielectric constant organic polymer such as high dielectric constant cyanoethylated cellulose (e.g., cyanoethylated cellulose, cyanoethylated hydroxy-cellulose, and cyanoethylatated pullulan), or a dispersion of high electric constant fine particles (diameter: several nm to several μm) such as particles of $BaTiO_3$, $SrTiO_3$, $TiO_2$ or $Y_2O_3$ dispersed in a an organic polymer having a relatively low dielectric constant, such as styrene resin, silicone resin, epoxy resin, or fluorinated vinylidene resin.
(2) $Y_2O_3$, $Ta_2O_5$, $BaTa_2O_6$, $BaTiO_3$, $TiO_2$, Sr(Zr,Ti) $O_3$, $SrTiO_3$, $PbTiO_3$, $Al_2O_3$, $Si_3N_4$, ZnS, $ZrO_2$, $PbNbO_3$, and $Pb(Zr,Ti)O_3$. It is preferred that the material has a high dielectric constant and high resistance to dielectric breakdown. The light-scattering property can be given by employing a material which has a refractive index differing from the refractive index of the phosphor particle (or the dielectric material-coated phosphor particle), or forming areas (voids or particles having submicron level to several micron level) having different refractive indexes in the interior of the layer.

[Light-transmitting, high refraction electrode]

The materials described above as the material for the light-transmitting electrode can be employed under the condition that the materials have a refractive index equivalent to or higher than the refractive index of the dielectric material phase in the light-emitting layer.

[Light-scattering, high refraction layer]

The materials described above as the material for the light-scattering reflective layer can be employed under the condition that the materials have a refractive index equivalent to or higher than the refractive indexes of the light-emitting layer and intermediate layer(s).

[Insulating material layer]

There can be mentioned $Y_2O_3$, $Ta_2O_5$, $BaTa_2O_6$, $BaTiO_3$, $TiO_2$, $Sr(Zr,Ti)O_3$, $SrTiO_3$, $PbTiO_3$, $Al_2O_3$, $Si_3N_4$, ZnS, $ZrO_2$, $PbNbO_3$, and $Pb(Zr,Ti)O_3$. It is preferred that the material has a high dielectric constant and high resistance to dielectric breakdown. The material can be light-scattering material such as a sintered material, provided that the layer does not prominently decrease the dielectric constant of the layer.

[Buffer layer]

It is preferred that the material has a refractive index equivalent to or higher than the refractive indexes of the light-emitting layer and intermediate layer(s).

[Front phosphor layer]

Blue light(B)-emitting phosphor:

Excitable by UV: $Sr_2P_2O_7$:Eu, $Sr_5(PO_4)_3$Cl:Eu, SrS : Ce, $SrGa_2S_4$:Ce, $CaGa_2S_4$:Ce

Green light(G)-emitting phosphor:

Excitable by UV: $BaMg_2Al_{16}O_{27}$:Eu,Mn, ZnS:Tb
Excitable by blue light: $Y_3Al_5O_{12}$:Ce

Red light(R)-emitting phosphor:

Excitable by UV: Y(PV)$O_4$, $YVO_4$:Eu, ZnS:Sm, (Ca, Sr)S:Eu
Excitable by blue light: (Ca,Sr)S:Eu

Light-scattering layer (W):

Excitable by blue light: Same as those for the production of the light-scattering reflective layer

[Color filter layers (R, B, G)]

a color face plate for CRT, a light-conversion element plate for duplication, a filter for mono-tube color television, a filter for flat liquid crystal panel display, a filter for color solid imaging device, those described in JP-A-8-20161

[Protecting film]

light-transmitting film having a thickness of 1 to 50 μm, which may be provided with such functions as antireflection, anti-staining property and anti-static property. Multi-layered protecting film can be employed.

[Example 1]

A white $BaSO_4$-containing polyethylene terephthalate (PET) sheet (thickness: 350 μm) was prepared as a light-scattering reflective opaque substrate. On the substrate was coated a light-transmitting back electrode (thickness: approx. 10 μm) comprising electroconductive particles of $In_2O_3$ and $SnO_2$ dispersed in a resin by a screenprinting method.
Spherical particles (mean diameter: 1 μm) of ZnS:Mn phosphor were prepared by a spray heat-decomposing method. The particles were then coated with a coat (mean thickness: 0.2 μm) of dielectric $BaTiO_3$ material by a metal alkoxide mixture-hydrolyzing method (see JP-A-6-200245) to give complex phosphor particles. The complex phosphor particles and $BaTiO_3$ super fine particles (mean diameter: 0.3 μm) were dispersed in an acrylic resin solution to give a dispersion (resin: phosphor particles:$BaTiO_3$ super fine particles=2:1:1, volume ratio). The dispersion was coated on the light-transmitting electrode and dried to give a light-emitting layer (mean thickness: 10 μm).
On a PET sheet (thickness: 10 μm, a light-transmitting protecting film) was formed an ITO electrode (thickness: 0.1 μm, a light-transmitting front electrode) by sputtering. The ITO electrode of the PET film was then laminated on the light-transmitting layer.
Thus, the dispersion EL device of the invention illustrated in Fig. 4 was manufactured.

[Example 2]

A white $BaSO_4$-containing polyethylene terephthalate (PET) sheet (thickness: 350 μm) was prepared as a light-scattering reflective opaque substrate. On the substrate was coated a light-transmitting back electrode (thickness: approx. 10 μm) comprising electroconductive particles of $In_2O_3$ and $SnO_2$ dispersed in a resin by a screenprinting method.
Spherical particles (mean diameter: 1 μm) of

dielectric BaTiO$_3$ material were prepared by a spray heat-decomposing method. The particles were then coated with a coat (mean thickness: 0.2 μm) of ZnS:Mn phosphor by a MOCVD method (see WO 96/09353). The coated particles were further coated with a coat of BaTiO$_3$ by a metal alkoxide mixture-hydrolyzing method (see JP-A-6-200245) to give complex phosphor particles. The complex phosphor particles and BaTiO$_3$ super fine particles (mean diameter: 0.3 μm) were dispersed in an acrylic resin solution to give a dispersion (resin: phosphor particles:BaTiO$_3$ super fine particles=2:1:1, volume ratio). The dispersion was coated on the light-transmitting electrode and dried to give a light-emitting layer (mean thickness: 10 μm).

On a PET sheet (thickness: 10 μm, a light-transmitting protecting film) was formed an ITO electrode (thickness: 0.1 μm, a light-transmitting front electrode) by sputtering. The ITO electrode of the PET film was then laminated on the light-transmitting layer.

Thus, the dispersion EL device of the invention illustrated in Fig. 5 was manufactured.

[Utilization in Industry]

By the use of the electroluminescence device of the invention, it is able to extract a light emitted therein outside with a high efficiency under the condition that the size of device is the same as and the electric power required is the same as that of the conventional electroluminescence device. Further, a dispersion electroluminescence device of the invention shows an increased emission efficiency in the extraction from the light-emitting layer.

**Claims**

1. A dispersion electroluminescence device comprising a back face sheet, a light-transmitting back electrode, a light-emitting layer comprising electroluminescence light-emitting particles dispersed in a dielectric material phase, a light-transmitting front electrode, and a light-transmitting front protecting film arranged in order, wherein the back face sheet shows a light-scattering reflective property and the light-emitting layer shows a light-scattering property.

2. The electroluminescence device of claim 1, wherein the electroluminescence light-emitting particle comprises a phosphor particle coated with a coat layer.

3. The electroluminescence device of claim 2, wherein the coat layer has a refractive index of 65% or higher based on a refractive index of the phosphor particle.

4. The electroluminescence device of claim 2 or 3, wherein the dielectric material phase of the light-emitting layer has a refractive index of 65% or higher based on a refractive index of the phosphor particle.

5. The electroluminescence device of one of claims 1 through 4, wherein the dielectric material phase comprises inorganic or organic fine particles dispersed in organic polymer.

6. A dispersion electroluminescence device comprising a back face sheet, a back electrode, a light-emitting layer comprising electroluminescence light-emitting particles dispersed in a dielectric material phase, a light-transmitting front electrode, and a light-transmitting front protecting film arranged in order, wherein the electroluminescence light-emitting particle comprises a dielectric material particle coated with a phosphor layer which is further coated with an outer coat layer.

7. The electroluminescence device of claim 6, wherein the dielectric material phase comprises an organic polymer.

8. The electroluminescence device of claim 6, wherein the dielectric material phase comprises inorganic or organic fine particles dispersed in an organic polymer.

9. The electroluminescence device of claim 7 or 8, wherein the light-emitting layer shows a light scattering property.

10. The electroluminescence device of one of claims 7 through 9, wherein the back electrode is a light-transmitting electrode and the back face sheet shows a light-scattering reflective property.

11. The electroluminescence device of one of claims 7 through 10, wherein the outer coat layer of the electroluminescence light-emitting particle has a refractive index of 65% or higher based on a refractive index of the phosphor layer of the light-emitting particle.

12. The electroluminescence device of one of claims 7 through 11, wherein the dielectric material phase of the light-emitting layer has a refractive index of 65% or higher based on a refractive index of the phosphor layer of the light-emitting particles.

13. The electroluminescence device of one of claims 7 through 12, wherein the back electrode is a light-transmitting electrode, the back face sheet is a light-scattering reflective, high refraction sheet which comprises as main component a material having a refractive index of 80% or higher based on a refractive index of the phosphor layer of the electroluminescence light-emitting particle, and a refractive index of material placed between the electroluminescence light-emitting particles and the back face sheet is adjusted, whereby 40% or more of a light emitted by the light-emitting particles toward a back side enters the back face sheet.

14. The electroluminescence device of one of claims 7 through 13, wherein the back electrode is a light-transmitting electrode, the back face sheet shows a light-scattering reflective property, a light-scattering, high refraction layer comprising as main component a material having a refractive index of 80% or higher based on a refractive index of the phosphor layer of the electroluminescence light-emitting particle is placed between the front electrode and the front protecting film, and a refractive index of material placed between the light-emitting particles and the light-scattering, high refraction layer is adjusted, whereby 40% or more of a light emitted by the electroluminescence light-emitting particles toward a front side enters the light-scattering, high refraction layer.

15. A dispersion electroluminescence device comprising a back face sheet, a back electrode, a light-scattering or non light-scattering, light-emitting layer which comprises electroluminescence light-emitting particles dispersed in a dielectric material phase, a light-transmitting front electrode, and a light-transmitting front protecting film arranged in order, wherein the electroluminescence light-emitting particle comprises a dielectric material particle coated with a phosphor layer.

16. The electroluminescence device of claim 15, wherein the back electrode is a light-transmitting electrode and the back face sheet shows a light-scattering reflective property.

17. The electroluminescence device of claim 15 or 16, wherein the dielectric material phase has a refractive index of 65% or higher based on a refractive index of the phosphor layer of the electroluminescence light-emitting particle.

18. The electroluminescence device of one of claims 15 through 17, wherein the dielectric material particle has a dielectric constant of as much as 3 times or more based on a dielectric constant of the phosphor layer of the electroluminescence light-emitting particle.

19. The electroluminescence device of one of claims 15 through 18, wherein the back electrode is a light-transmitting electrode, the back face sheet is a light-scattering reflective, high refraction sheet which comprises as main component a material having a refractive index of 80% or higher based on a refractive index of the phosphor layer of the electroluminescence light-emitting particle, and a refractive index of material placed between the light-emitting particles and the back face sheet is adjusted, whereby 40% or more of a light emitted by the electroluminescence light-emitting particles toward a back side enters the back face sheet.

20. The electroluminescence device of one of claims 15 through 19, wherein the back electrode is a light-transmitting electrode, the back face sheet shows a light-scattering reflective property, a light-scattering, high refraction layer which comprises as main component a material having a refractive index of 80% or higher based on a refractive index of the phosphor layer of the electroluminescence light-emitting particle is placed between the front electrode and the front protecting film, and a refractive index of material placed between the light-emitting particles and the light-scattering, high refraction layer is adjusted, whereby 40% or more of a light emitted by the electroluminescence light-emitting particles toward a front side enters the light-scattering, high refraction layer.

21. A dispersion electroluminescence device comprising a back face sheet, a light-transmitting back electrode, a light-emitting layer comprising electroluminescence light-emitting particles dispersed in a dielectric material phase, a light-transmitting front electrode, and a light-transmitting front protecting film arranged in order, wherein the back face sheet shows light reflection by a light-scattering effect, a light-scattering, high refraction layer which comprises as main component a material having a refractive index of 80% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 40% or more of a light emitted by the electroluminescence light-emitting layer toward a front side enters the light-scattering, high refraction layer.

22. The electroluminescence device of claim 21, wherein an insulating material layer is placed between the electroluminescence light-emitting layer and the light-transmitting front electrode and/or the light-transmitting back electrode.

23. The electroluminescence device of claim 21 or 22, wherein the light-scattering, high refraction layer comprises as main component a material having a refractive index of 95% or higher, based on the refractive index of the electroluminescence light-emitting layer, and the refractive index of material placed between the light-emitting layer and the light-scattering, high refraction layer is adjusted, whereby 70% or more of a light emitted by the light-emitting layer toward a front side enters the light-scattering, high refraction layer.

24. A dispersion electroluminescence device comprising a back face sheet, a light-transmitting back electrode, an electroluminescence light-emitting layer comprising electroluminescence light-emitting particles dispersed in a dielectric material phase, a light-transmitting front electrode, and a light-transmitting front protecting film arranged in order, wherein the back face sheet is a light-scattering reflective, high refraction sheet which comprises as main component a material having a refractive index of 80% or higher, based on a refractive index of the electroluminescence light-emitting layer, and a refractive index of material placed between the light-emitting layer and the back face sheet is adjusted, whereby 40% or more of a light emitted by the electroluminescence light-emitting layer toward a back side enters the back face sheet.

25. The electroluminescence device of claim 24, wherein an insulating material layer is placed between the electroluminescence light-emitting layer and the light-transmitting front electrode and/or the light-transmitting back electrode.

26. The electroluminescence device of claim 24 or 25, wherein a light-scattering, high refraction layer which comprises as main component a material having a refractive index of 80% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 40% or more of a light emitted by the electroluminescence light-emitting layer toward a front side enters the light-scattering, high refraction layer.

27. A dispersion electroluminescence device comprising a back face sheet, a back electrode, a back insulating material layer, an electroluminescence light-emitting layer comprising electroluminescence light-emitting particles dispersed in a dielectric material phase, a light-transmitting front electrode, a light-transmitting front protecting film arranged in order, wherein the back insulating material layer is a light-scattering, high refraction, insulating material layer which comprises as main component a material having a refractive index of 80% or higher based on a refractive index of the electroluminescence light-emitting layer, and 40% or more of a light emitted by the electroluminescence light-emitting layer toward a back side enters the back insulating layer.

28. The electroluminescence device of claim 27, wherein the back face sheet shows light reflection by a light-scattering effect and the back electrode is a light-transmitting electrode.

29. A dispersion electroluminescence device comprising a back face sheet, a light-transmitting back electrode, an electroluminescence light-emitting layer comprising electroluminescence light-emitting particles dispersed in a dielectric material phase, an front insulating material layer, a light-transmitting front electrode, and a light-transmitting front protecting film arranged in order, wherein the back face sheet shows light reflection by a light-scattering effect, the front insulating material layer is a light-scattering, high refraction, insulating material layer which comprises as main component a material having a refractive index of 80% or higher, based on a refractive index of the electroluminescence light-emitting layer, and 40% or more of a light emitted by the electroluminescence light-emitting layer toward a front side enters the front insulating material layer.

30. A dispersion electroluminescence device comprising a back face sheet, a back electrode, a back insulating material layer, an electroluminescence light-emitting layer comprising electroluminescence light-emitting particles dispersed in a dielectric material phase, a light-transmitting front electrode, and a light-transmitting front protecting film arranged in order, wherein the back insulating material layer has a thickness of 10 μm or more and is a light-scattering, high refraction, insulating material layer having a diffuse reflectance of 50% or higher.

31. The electroluminescence device of claim 30, wherein the diffuse reflectance of the back insulating material layer is 70% or higher.

32. The electroluminescence device of claim 30 or 31, wherein the thickness of the back insulating material layer is in the range of 10 to 100 μm.

33. An electroluminescence device comprising a back face sheet, a back electrode, a back insulating material layer, an electroluminescence light-emitting layer, a light-transmitting front electrode, and a light-transmitting front protecting film arranged in order, wherein the back insulating material layer has a thickness of 10 μm or more and is a light-scattering, high refraction, insulating material layer having a diffuse reflectance of 50% or higher.

34. The electroluminescence device of claim 33, wherein an insulating material layer is placed on a front side of the electroluminescence light-emitting layer.

35. The electroluminescence device of claim 33, wherein the diffuse reflectance of the back insulating material layer is 70% or higher.

36. The electroluminescence device of claim 33 or 35, wherein the thickness of the back insulating material layer is in the range of 10 to 100 µm.

37. The electroluminescence device of one of claims 33 through 36, wherein the electroluminescence light-emitting layer is made of a thin phosphor film.

38. An electroluminescence device comprising a back face sheet, a light-transmitting back electrode, an electroluminescence light-emitting layer, a light-transmitting front electrode, and a light-transmitting front protecting film arranged in order, wherein the back face sheet is a light-scattering reflective, high refraction sheet comprising as main component a material having a refractive index of 80% or higher based on a refractive index of the electroluminescence light-emitting layer, and a refractive index of material placed between the light-emitting layer and the back face sheet is adjusted, whereby 40% or more of a light emitted by the electroluminescence light-emitting layer toward a back side sheet enters the back face sheet.

39. The electroluminescence device of claim 38, wherein an insulating material layer is placed on a front side and/or a back side of the electroluminescence light-emitting layer.

40. The electroluminescence device of claim 38, wherein a light-scattering, high refraction layer which comprises as main component a material having a refractive index of 80% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 40% or more of a light emitted by the electroluminescence light-emitting layer toward a front side enters the light-scattering, high refraction layer.

41. An electroluminescence device comprising a back face sheet, a light-transmitting back electrode, a back insulating material layer, an electroluminescence light-emitting layer, a light-transmitting front electrode, and a light-transmitting front protecting film arranged in order, wherein the back face sheet shows light-scattering reflection, the back insulating material layer is a light-scattering, high refraction, insulating material layer which comprises as main component a material having a refractive index of 80% or higher based on a refractive index of the electroluminescence light-emitting layer, and 40% or more of a light emitted by the electroluminescence light-emitting layer toward a back side enters the back insulating material layer.

42. The electroluminescence device of claim 41, wherein an insulating material layer is placed on a front side of the electroluminescence light-emitting layer.

43. An electroluminescence device comprising a back face sheet, a light-transmitting back electrode, an electroluminescence light-emitting layer, a light-transmitting front electrode, and a light-transmitting front protecting film arranged in order, wherein the back face sheet shows light reflection by a light-scattering effect, a light-scattering, high refraction layer comprising as main component a material having a refractive index of 80% or higher based on a refractive index of the electroluminescence light-emitting layer is placed between the light-transmitting front electrode and the front protecting film, and a refractive index of material placed between the light-emitting layer and the light-scattering, high refraction layer is adjusted, whereby 40% or more of a light emitted by the electroluminescence light-emitting layer toward a front side enters the light-scattering, high refraction layer.

44. The electroluminescence device of claim 43, wherein an insulating material layer is placed on a front side and/or a back side of the electroluminescence light-emitting layer.

45. An electroluminescence device comprising a back face sheet, a light-transmitting back electrode, an electroluminescence light-emitting layer, a light-transmitting front electrode, and a light-transmitting front protecting film arranged in order, wherein the back face sheet shows light reflection by a light-scattering effect, a light-scattering, high refraction, insulating material layer comprising as main component a material having a refractive index of 80% or higher based on a refractive index of the electroluminescence light-emitting layer is placed on a front side of the electroluminescence light-emitting layer, whereby 40% or more of a light emitted by the electroluminescence light-emitting layer toward a front side enters the light-scattering, high refraction, insulating material layer.

**46.** The electroluminescence device of claim 45, wherein an insulating material layer is placed on a back side of the electroluminescence light-emitting layer.

**47.** An electroluminescence device comprising a back face sheet, a light-transmitting back electrode, an electroluminescence light-emitting layer, a light-transmitting front electrode, and a light-transmitting front protecting film arranged in order, wherein the back face sheet shows light reflection by a light-scattering effect, a light-scattering, high refraction, insulating material layer which comprises as main component a material having a refractive index of 80% or higher based on a refractive index of the electroluminescence light-emitting layer is placed on a back side of the electroluminescence light-emitting layer, whereby 40% or more of a light emitted by the electroluminescence light-emitting layer toward a back side enters the light-scatting, high refraction, insulating material layer.

**48.** The electroluminescence device of claim 47, wherein an insulating material layer is placed on a front side of the electroluminescence light-emitting layer.

# FIG. 1

~12b
~14b
~13
~12a
~11a

# FIG. 2

~22b
~24b
~23
~24a
~22a
~21a

# FIG. 3

31b
32b

33

35

32a
37

# FIG. 4

31b
32b

40

33

35

32a
37

# FIG. 5

# FIG. 6

# FIG. 7

~121
~122b
~123
~122a
~125
~126
~127

# FIG. 8

~131
~132b
~134
~133
~132a
~135
~136
~137

# FIG. 9

# FIG. 10

# FIG. 11

~231
~232b
~234
~233
~232a
~236
~237

# FIG. 12

~241
~242b
~243
~244
~242a
~246
~247

# FIG. 13

~251
~252b
~253
~252a
~255
~256
~257

# FIG. 14

~341
~342
~343
~344
~346
~347
~348

# FIG. 15

331
332
333
334
335
336
337
338

# FIG. 16

431b
432b
434b
433
434a
432a
436
437

# FIG. 17

~441b
~442b
~444b
~443
~444a
~442a
~448a
~446
~447

# FIG. 18

~451b
~452b
~454b
~453
~454a
~452a
~455a
~458a
~457

# FIG. 19

461b
462b
464b
463
464a
462a
466
467

# FIG. 20

471a
479(475b)
472b
474b
473
474a(475a)
472a
476
477

# FIG. 21

481b
482b
484b(485b)
483
484a
482a
486
487

# FIG. 22

531b
532b
534b
533
534a
532a
535a
536
537

# FIG. 23

~541b
~542b
~544b
~543
~544a
~542a
~545a
~548a
~547

# FIG. 24

~551b
~552b
~554b
~553
~554a(555a)
~552a
~556
~557

# FIG. 25

~561a
~569
~562b
~564b
~563
~564a(565a)
~562a
~566
~567

# FIG. 26

635   634   636   633

Displaying
Side

632

751   638   741   637   731   631

752a   752b   742a   742b   732a   732b

# FIG. 27

641
642a
643
642b
644
642c
645
642d
646
642e
647
648

# FIG. 28

651
652a
653
652b
654
652c
655
652d
656
652e
658

# FIG. 29

661
662a
665a
663
665b
662b
665c
664
665d
662c
665e
662d
665f
666
665g
662e
667
668

# FIG. 30

**EP 1 377 134 A1**

| INTERNATIONAL SEARCH REPORT | International application No. |
|---|---|
| | PCT/JP02/03226 |

**A. CLASSIFICATION OF SUBJECT MATTER**
Int.Cl⁷  H05B33/14, H05B33/22, H05B33/02, C09K11/02, C09K11/08

According to International Patent Classification (IPC) or to both national classification and IPC

**B. FIELDS SEARCHED**

Minimum documentation searched (classification system followed by classification symbols)
Int.Cl⁷  H05B33/00-33/28, C09K11/02, C09K11/08

Documentation searched other than minimum documentation to the extent that such documents are included in the fields searched

| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 7-34396 B  (JEL Kabushiki Kaisha), 12 April, 1995 (12.04.95), (Family: none) | 1-5,21-26, 29,38-48 |
| A | Microfilm of the specification and drawings annexed to the request of Japanese Utility Model Application No. 152389/1987 (Laid-open No. 56198/1989) (Nissan Motor Co., Ltd.), 07 April, 1989 (07.04.89), (Family: none) | 1-5,21-26, 29,38-48 |
| A | JP 3-1485 A  (NEC Kansai, Ltd.), 08 January, 1991 (08.01.91), (Family: none) | 1-5,21-26, 29,38-48 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 June, 2002 (19.06.02) | 02 July, 2002 (02.07.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

41

EP 1 377 134 A1

**INTERNATIONAL SEARCH REPORT**

International application No.

PCT/JP02/03226

C (Continuation). DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 76428/1988 (Laid-open No. 179397/1989) (Nichia Chemical Industries, Ltd.), 22 December, 1989 (22.12.89), (Family; none) | 1-5,21-26, 29,38-48 |
| A | JP 62-172691 A (Komatsu Ltd.), 29 July, 1987 (29.07.87), & EP 229627 A     & KR 9700428 B1 & KR 132785 B1 | 1-5,21-26, 29,38-48 |

Form PCT/ISA/210 (continuation of second sheet) (July 1998)

**EP 1 377 134 A1**

## INTERNATIONAL SEARCH REPORT

International application No.

PCT/JP02/03226

| Box I   Observations where certain claims were found unsearchable (Continuation of item 1 of first sheet) |
| --- |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box II   Observations where unity of invention is lacking (Continuation of item 2 of first sheet) |
| --- |

This International Searching Authority found multiple inventions in this international application, as follows:

Claims 1, 21, 24, 29, 38, 41, 43, 45, and 47 have the common technical feature that " a back face sheet has the performance of light scattering reflection", but the other claims 6, 15, 27, 30, and 33 do not have this technical feature.
Claims 6, 15 have the common technical feature that "EL particles are particles each comprising a fluorescent layer formed around a dielectric material particle and a coating layer formed outside it", but the other claims 27, 30, and 33 do not have the technical feature.
The technical feature common to claims 27, 30, and 33 is that "a back-face side insulator layer is a high-refractive-index light scattering insulator layer".

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-5, 21-26, 29, 38-48

| Remark on Protest | ☐ The additional search fees were accompanied by the applicant's protest. |
| --- | --- |
|  | ☐ No protest accompanied the payment of additional search fees. |

Form PCT/ISA/210 (continuation of first sheet (1)) (July 1998)

43